# EUROPEAN PATENT APPLICATION

(11) **EP 4 653 500 A1**
(43) Date of publication of application: **26.11.2025**
(21) Application number: 23927601.7
(22) Date of filing: 30.11.2023
(51) Int. Cl.: C08L 101/06, C08F 20/00, C08K 3/01, C08L 33/06, C08L 63/00

(54) **THERMOSETTING RESIN COMPOSITION AND CURED FILM**

(30) Priority: 13.03.2023 JP 2023038377; 23.10.2023 JP 2023181751
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); MATSUDA, Tomoya, Nara-shi, Nara 630-8453 (JP); ASADA, Kosuke, Nara-shi, Nara 630-8453 (JP); DONKAI, Masaru, Nara-shi, Nara 630-8453 (JP); NAKAGAWA, Hiroki, Nara-shi, Nara 630-8453 (JP); YOSHIDA, Narutoshi, Nara-shi, Nara 630-8453 (JP); TAKENAKA, Naomi, Nara-shi, Nara 630-8453 (JP)
(74) Representative: Isarpatent
(86) International application number: PCT/JP2023/042883
(87) International publication number: WO 2024/189996

(57) **Abstract**

Provided is a thermosetting resin composition whose curing reaction is transesterification, which has curing performance at lower temperatures and is also capable of being made aqueous.

The thermosetting resin composition includes: a resin component (A) containing an ester group (a), an epoxy group (b), and a hydroxyl group (c); and a transesterification catalyst (B), in which the ester group is any one of (a-1) to (a-5).

## Description

### Technical Field

The present invention relates to a thermosetting resin composition and also to a cured film.

### Background Art

The present inventors have studied thermosetting resin compositions whose curing reaction is a transesterification reaction (PTLs 1 to 3). From recent studies, it is becoming clear that when the curing reaction is a transesterification reaction, the same level of curing performance as in the generally known curing using a melamine resin or a polyisocyanate compound can be ensured.

Meanwhile, in recent years, due to the demand for energy saving, it is desired to achieve curing at lower temperatures than before. Although sufficient reduction in the temperature has been achieved in various methods as those described in PTLs 1 to 3, it would be preferable if curing at non-conventional, even lower temperatures could be achieved. Further, from the viewpoint of VOC, high-solid types, aqueous ones, and the like have also been widely studied.

PTL 4 discloses a curable resin composition that uses a compound containing an ester group represented by a specific structure and causes a curing reaction through transesterification. However, a detailed study for obtaining sufficient low-temperature curing properties has not been made.

PTL 5 describes that an epoxy compound is blended in a resin composition whose curing reaction is a transesterification reaction.

PTL 6 describes that an unsaturated group is introduced into such a thermosetting resin composition that can be cured by transesterification reaction, thereby forming a dual-cure type curable composition that also has an energy ray curing function.

### Citation List

### Patent Literature

PTL 1: JP6398026B
PTL 2: WO2019/069783
PLT 3: WO2019/139069
PTL 4: JP2003-119401A
PTL 5: JPH02-147675A
PTL 6: WO2021/006290

### Summary of Invention

### Technical Problem

In light of the above, an object of the invention is to provide a thermosetting resin composition whose curing reaction is transesterification, which has curing performance at lower temperatures and is also capable of being made aqueous, and also a cured film obtained using the same.

### Solution to Problems

The invention is a thermosetting resin composition including: a resin component (A) containing an ester group (a), an epoxy group (b), and a hydroxyl group (c); and a transesterification catalyst (B), characterized in that the ester group is any one of the following (a-1) to (a-5).
(a-1) Compound represented by the following general formula (1) 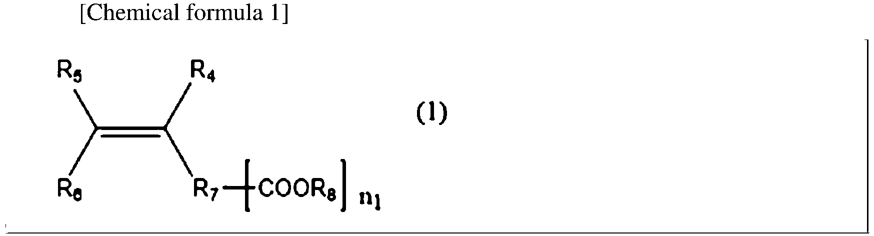 n1: 1 to 10
   (In the formula, R₄, R₅, and R₆ are the same or different and are each hydrogen, an alkyl group, a carboxyl group, an alkyl ester group, or a structure represented by the following R₇-[COOR₈]n₁.
   R₇ is an aliphatic, alicyclic, or aromatic alkylene group whose main chain has 50 or less atoms and which optionally has one or more functional groups selected from the group consisting of an ester group, an ether group, an amide group, and urethane in the main chain and optionally has a side chain.
   R₈ is an alkyl group having 50 or less carbon atoms.
   The R₇-[COOR₈]n₁ group in the compound represented by general formula (1) may be a lactone structure represented by the following general formula (1-1).) 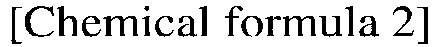 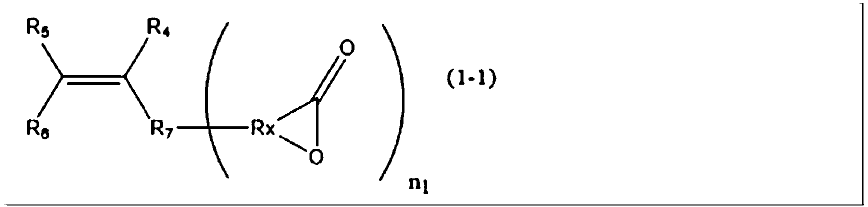
(a-2) Polymer having the above (a-1) as a structural unit
(a-3) Compound having a structure represented by the following general formula (2) 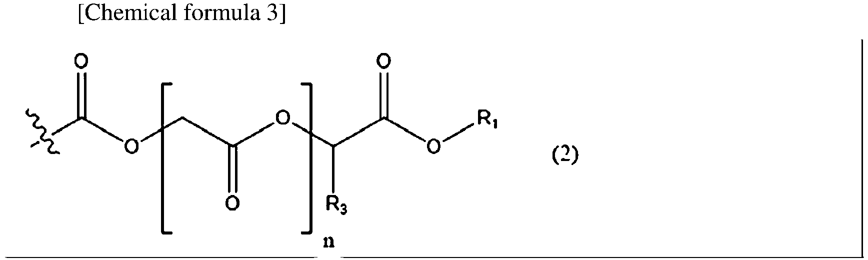
   n = 0 to 20
   R₁ is an alkyl group having 50 or less carbon atoms.
   R₃ is hydrogen or an alkyl group having 10 or less carbon atoms.
(a-4) Compound having a structure represented by the following general formula (3) or (4) 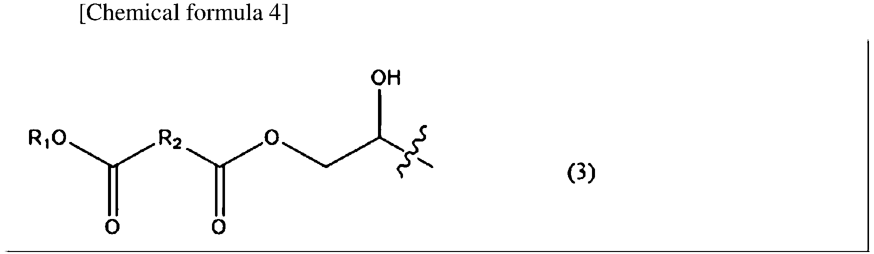 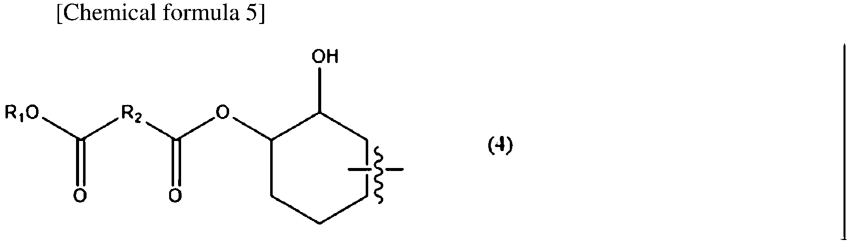
   (In both of the above general formula (3) and general formula (4), R₁ is an alkyl group having 50 or less carbon atoms.
   R₂ is an alkylene group having 50 or less carbon atoms and optionally partially containing an oxygen atom or a nitrogen atom)
(a-5) Following general formula (5) and/or general formula (6) 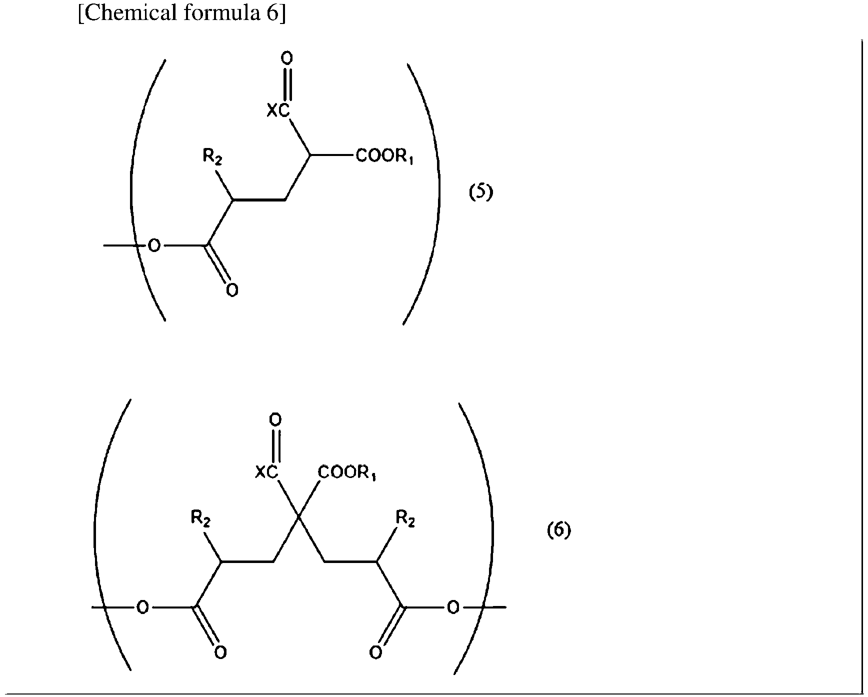
   (R₁ represents a primary or secondary alkyl group. R₂ represents hydrogen or a methyl group.
   X represents a hydrocarbon group having 5 or less carbon atoms or an -OR₁ group.

The resin component (A) may further contain an unsaturated functional group.

The resin component (A) may further have a carboxyl group.

The resin component (A) may be an aqueous composition.

The resin component (A) may have been made aqueous by neutralizing the carboxyl group.

The invention is also a cured film characterized by being obtained by curing the thermosetting resin composition described above.

### (Advantageous Effects of Invention)

The thermosetting resin composition of the invention has excellent curing performance at lower temperatures and is also capable of being made aqueous. In addition, there is an advantage in that sufficient curing performance can be obtained even in the case where a compound having a carboxyl group is used for the improvement of adhesion or pigment dispersion.

### Description of Embodiments

Hereinafter, the invention will be described in detail.

The present inventors have studied thermosetting resin compositions whose crosslinking reaction is a transesterification reaction. This has given them a lot of findings.

One of these findings is that a thermosetting resin composition having an ester group like the above (a-1) to (a-5) is particularly excellent in curing performance at low temperatures.

General transesterification catalysts such as acids, bases, and metal catalysts can be used for crosslinking through a transesterification reaction. In previous studies, use of a metal catalyst has been effective in achieving crosslinking at lower temperatures.

In the case where a thermosetting resin composition is made water-based, generally, a carboxyl group is contained in the resin and neutralized to make it aqueous. However, in the case of such a composition, the carboxyl group acts as an obstructive factor, and it has been impossible to perform sufficient curing at a low temperature.

The thermosetting resin composition of the invention has an epoxy group, thus has higher thermosetting performance, and therefore is presumed to alleviate these problems. Still more specifically, it is presumed that because a carboxylic acid required for making a resin aqueous reacts with the epoxy group during baking, a transesterification reaction takes place at a low temperature even in a resin has made aqueous.

The invention is a thermosetting resin composition including: a resin component (A) containing an ester group (a) as represented by the above (a-1) to (a-5), an epoxy group (b), and a hydroxyl group (c); and a transesterification catalyst (B).

For reasons that are unclear, ester groups (a) as represented by the above (a-1) to (a-5) are highly reactive in transesterification reactions. Therefore, when an ester compound having such a functional group is used as part or all of the resin component (A), the resulting thermosetting resin composition can be provided with better curing performance than before.

In addition, such an improving effect on reactivity can be obtained regardless of the type of catalyst used. That is, acid catalysts, basic catalysts, and metal compound catalysts are known as transesterification catalysts, and any of them may be used to obtain the excellent curing performance. Among them, it is preferable to use a basic catalyst and/or a metal compound catalyst.

The thermosetting resin composition of the present disclosure can be used in an incredibly wide variety of fields, including the field of coating materials, the field of adhesives, the field of electronic materials, and the like. Thus, each field has its specific challenges expected, which may limit the usable catalysts. Even in such a case, a catalyst suitable for each purpose can be used, offering another advantage.

Further, also in the case where the thermosetting resin composition is used as a coating material, and coating is performed in a wet-on-wet manner, the thermosetting resin composition of the invention has non-conventional excellent effects and can be favorably used.

In the coating fields, such as automotive coating materials, the formation of a multilayer coating film by laminating a plurality of coating film layers is often performed.

In the formation of such a multilayer coating film, generally, a coating film formation method in which an aqueous base coating material is applied and then only dried without heat curing, a solvent-based clear coating material is applied onto the resulting uncured coating film, and the coating films of the multilayered system are simultaneously cured, is performed.

In such coating, components of the aqueous base coating film transfer to the clear coating film. As a result, the catalytic activity of the solvent-based clear coating material is lost, making it impossible to sufficiently obtain the curing properties of the clear coating material in some cases. Therefore, it has sometimes been impossible to perform sufficient curing at a low temperature, making it impossible to sufficiently obtain the effect, that is, low-temperature curing.

The thermosetting resin composition of the invention is highly reactive as described above, and thus, in the formation of a multilayer coating film in a wet-on-wet manner described above, can be cured at a relatively low temperature even in the case where its layer mixes with other layers of the coating film. As a result, a multilayer coating film can be formed efficiently by curing at a low temperature.

Thus, in the formation of a multilayer coating film in a wet-on-wet manner described above, the thermosetting resin composition of the invention can be used as an aqueous base coating material composition for the lower layer, and can also be used as a solvent-based clear coating material composition for the upper layer. In addition, it is also possible to use the thermosetting resin composition of the invention for both of them.

Compounds having an ester group having the structure of the ester group (a) as represented by the above (a-1) to (a-5) are all known compounds, and they will be briefly described hereinafter.

### (a-1) Compound represented by the following general formula (1)

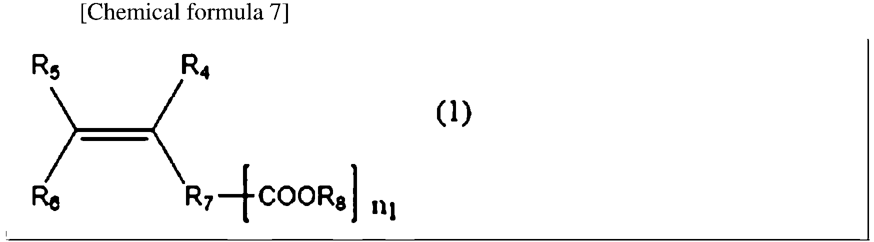

n1: 1 to 10
(In the formula, R₄, R₅, and R₆ are the same or different and are each hydrogen, an alkyl group, a carboxyl group, an alkyl ester group, or a structure represented by the following R₇-[COOR₈]n₁.
R₇ is an aliphatic, alicyclic, or aromatic alkylene group whose main chain has 50 or less atoms and which optionally has one or more functional groups selected from the group consisting of an ester group, an ether group, an amide group, and urethane in the main chain and optionally has a side chain.
R₈ is an alkyl group having 50 or less carbon atoms.
The R₇-[COOR₈]n₁ group in the compound represented by general formula (1) may be a lactone structure represented by the following general formula (1-1).)

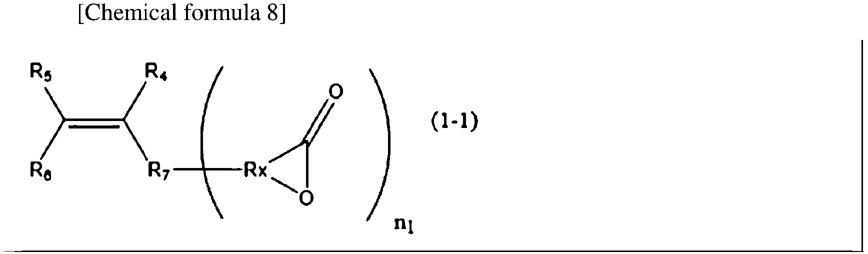

The ester group in such a compound is prone to a transesterification reaction. Further, because such a compound has an unsaturated group, energy ray curing can also be caused by such an unsaturated group. Therefore, the thermosetting resin composition can be a dual-cure type, which can be cured through both heat curing and energy ray curing.

As a structure represented by the above general formula (1), more specifically, for example, one represented by the following formula can be exemplified. 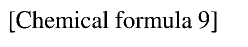 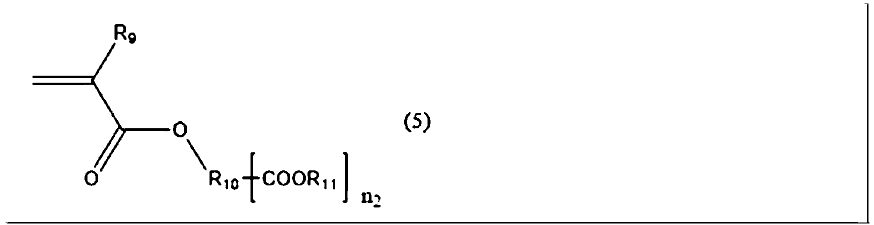
n₂: 1 to 10
(In the formula, R₉ is H or a methyl group.
R₁₀ is an alkylene group whose main chain has 48 or less atoms and which optionally has an ester group, an ether group, and/or an amide group in the main chain and optionally has a side chain.
R₁₁ is an alkyl group having 50 or less carbon atoms.)
Such a compound is a derivative of (meth)acrylic acid, and can be obtained by a known synthesis method that uses (meth)acrylic acid or a derivative thereof as a raw material.

The number of atoms in the main chain of R₁₀ is more preferably 40 or less, still more preferably 30 or less, and yet more preferably 20 or less. Atoms that may be contained in the main chain of R₁₀ are not particularly limited, and, in addition to a carbon atom, the main chain may also have an oxygen atom, a nitrogen atom, a sulfur atom, a silicon atom, and the like. Still more specifically, in addition to an alkyl group, R₁₀ may also have an ether group, an ester group, an amino group, an amide group, a thioether group, a sulfonic acid ester group, a thioester group, a siloxane group, and the like in the main chain.

As a structure represented by the above general formula (5), still more specifically, for example, a compound represented by the following general formula (12) or the like can be mentioned. 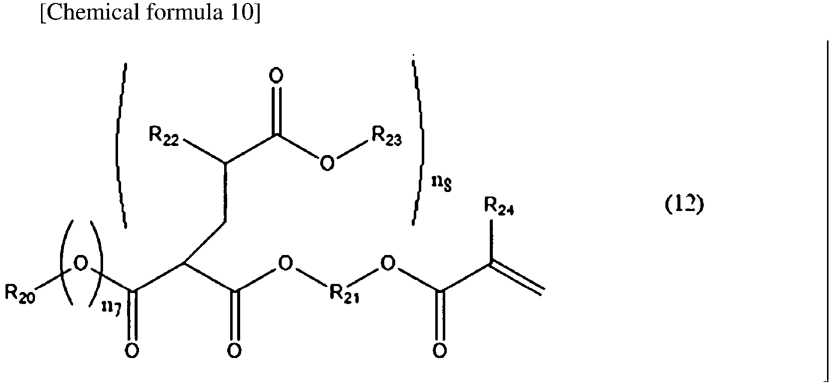
(In the formula, R₂₀ is an alkyl group having 1 to 50 carbon atoms.
R₂₁ is an alkylene group whose main chain has 44 or less atoms and which optionally has an ester group, an ether group, and/or an amide group in the main chain and optionally has a side chain.
R₂₂ is H or a methyl group.
R₂₃ is an alkyl group having 50 or less carbon atoms.
R₂₄ is H or a methyl group.
n₇ is 0 or 1.
n₈ is 1 or 2.)

A compound represented by the above general formula (5) may be a compound having a functional group represented by the following general formula (31) and an unsaturated group. 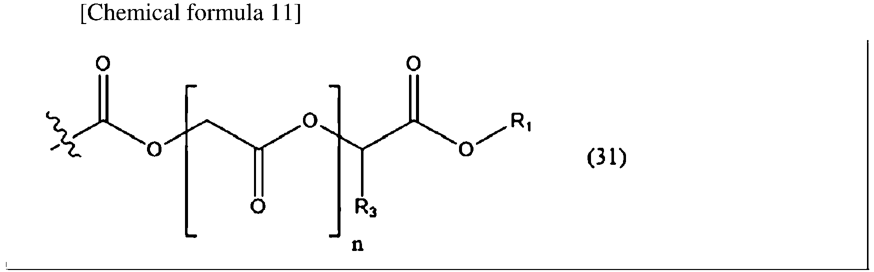
n = 0 to 20
R₁ is an alkyl group having 50 or less carbon atoms.
R₃ is hydrogen or an alkyl group having 10 or less carbon atoms.

That is, in the compound represented by general formula (1), the COOR₈ group may have a structure as represented by the above general formula (31).

For reasons that are unclear, an ester group represented by the above general formula (31) is highly reactive in a transesterification reaction. Therefore, when an ester compound having such a functional group is used as part or all of the resin component, a thermosetting resin composition having better curing performance than before can be obtained.

Therefore, it can be favorably used as a resin for obtaining a thermosetting resin composition having a cure onset temperature of 130°C or less and satisfying, when cured under conditions of baking at 150°C for 30 minutes, a gel fraction of 80% or more.

### (About the structure of general formula (31))

The structure of the above general formula (31) is based on an α-substituted carboxylic acid ester skeleton. In general formula (31), n is 0 to 20.

The lower limit of n is more preferably 0. The upper limit of n is more preferably 5. Further, a mixture of a plurality of components having different values of n in the above general formula (31) is also possible. In this case, the average value nav of n is preferably 0 to 5. The upper limit of nav is more preferably 3. The measurement of nav can be performed by NMR analysis. Further, the value of n can also be measured by NMR analysis. It is most preferable that n is 0.

In the above general formula (31), as R₁, any alkyl group having 50 or less carbon atoms can be used, and it may be primary, secondary, or tertiary.

The alkyl group in the above alkyl ester group (i.e., R₁ in the above general formula) is an alkyl group having 50 or less carbon atoms, but the number of carbon atoms is more preferably within a range of 1 to 20, still more preferably within a range of 1 to 10, and yet more preferably within a range of 1 to 6.

The number of carbon atoms is most preferably within a range of 1 to 4. Within such a range, the curing reaction can be allowed to favorably proceed; therefore, this is preferable.

As the alkyl ester group, specifically, for example, those having a known ester group, such as a methyl ester group, an ethyl ester group, a benzyl ester group, an n-propyl ester group, an isopropyl ester group, an n-butyl ester group, an isobutyl ester group, a sec-butyl ester group, and a t-butyl alkyl group, can be used.

As a compound having a structure represented by the above general formula (31) and an unsaturated bond, specifically, for example, a compound represented by the following general formula (36) can be obtained. 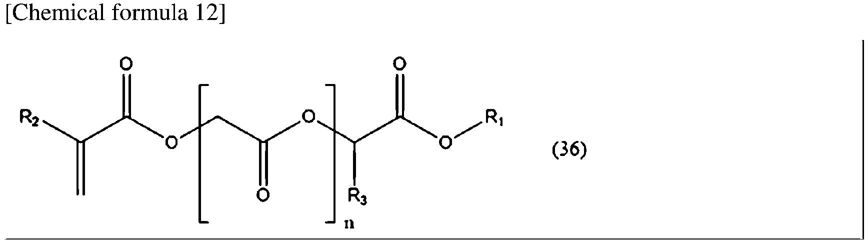
(In the formula, R₁ is an alkyl group having 50 or less carbon atoms.
R₂ is hydrogen or a methyl group.
R₃ is hydrogen or an alkyl group having 10 or less carbon atoms.
n is 0 to 20)
R₁ in a compound represented by the above general formula (36) may be primary, secondary, or tertiary as long as it has 50 or less carbon atoms. R₁ is more preferably primary or secondary, and most preferably primary.

A compound represented by the above general formula (5) may be a compound having a functional group represented by the following general formula (41) and/or a functional group represented by the following general formula (42) and an unsaturated group. 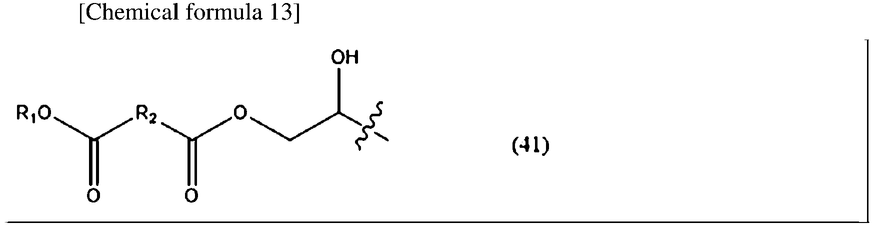 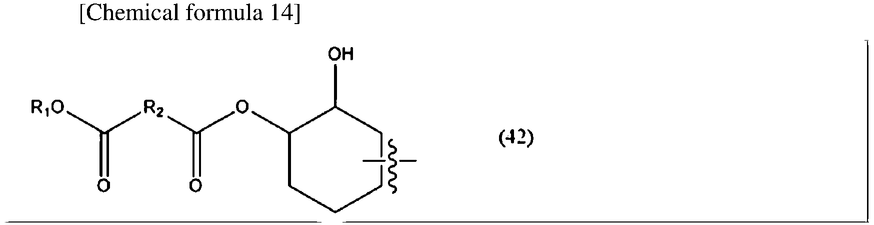
(In both of the above general formula (41) and general formula (42), R₁ is an alkyl group having 50 or less carbon atoms.
R₂ is an alkylene group having 50 or less carbon atoms and optionally partially containing an oxygen atom or a nitrogen atom)

As such compounds, more specifically, compounds represented by the following general formula can be mentioned.

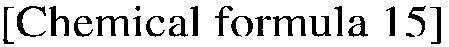

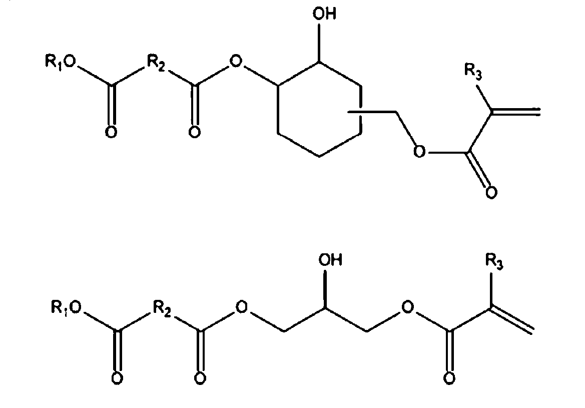

Examples of the specific chemical structures of compounds represented by general formula (1), which can be synthesized by the method exemplified above, are shown below. Incidentally, the invention is not limited to the compounds exemplified below. 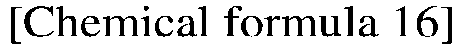 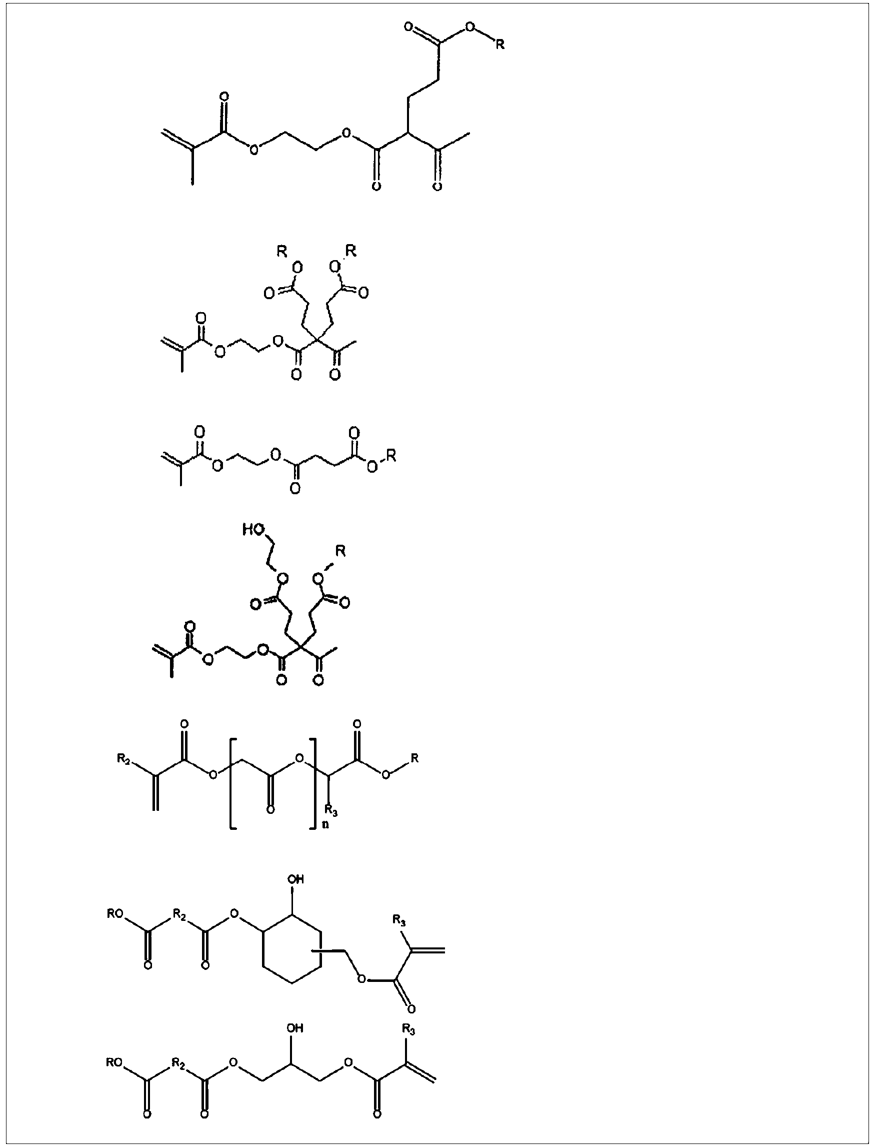 (In the above general formulas, R¹ represents an alkyl group having 50 or less carbon atoms)

### (a-2) Polymer having the above (a-1) as a structural unit

The compound of (a-1) described above has an unsaturated group, and thus can become a polymer through the polymerization of this unsaturated group. Such a polymer can also be favorably used in the invention.

The polymer used in the invention can be a homopolymer or copolymer composed only of a monomer represented by the above general formula (1), or can also be a copolymer using other monomers.

Other monomers that can be used in the polymer are not particularly limited, and any monomers having a polymerizable unsaturated group can be used. Monomers that can be used will be exemplified below.

Examples include:
various (meth)acrylic acid esters such as methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, and t-butyl (meth)acrylate;
various α-olefins such as ethylene, propylene, and butene-1;
various halogenated olefins excluding fluoroolefins, such as vinyl chloride and vinylidene chloride;
various aromatic vinyl compounds such as styrene, α-methylstyrene, and vinyltoluene; various amino group-containing amido-based unsaturated monomers such as N-dimethylaminoethyl (meth)acrylamide, N-diethylaminoethyl (meth)acrylamide, N-dimethylaminopropyl (meth)acrylamide, and N-diethylaminopropyl (meth)acrylamide;
various dialkylaminoalkyl (meth)acrylates such as dimethylaminoethyl (meth)acrylate and diethylaminoethyl (meth)acrylate; various amino group-containing monomers such as tert-butylaminoethyl (meth)acrylate, tert-butylaminopropyl (meth)acrylate, aziridinylethyl (meth)acrylate, pyrrolidinylethyl (meth)acrylate, and piperidinylethyl (meth)acrylate;
various carboxyl group-containing monomers such as (meth)acrylic acid, crotonic acid, itaconic acid, maleic acid, and fumaric acid; various epoxy group-containing monomers such as glycidyl (meth)acrylate, β-methylglycidyl (meth)acrylate, and (meth)allyl glycidyl ether; mono- and diesters of various α,β-unsaturated dicarboxylic acids, such as maleic acid, fumaric acid, and itaconic acid, and monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris(β-methoxyethoxy)silane, allyltrimethoxysilane, trimethoxysilylethyl vinyl ether, triethoxysilylethyl vinyl ether, methyldimethoxysilylethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane, and γ-(meth)acryloyloxypropylmethyldimethoxysilane;
various fluorine-containing α-olefins such as vinyl fluoride, vinylidene fluoride, trifluoroethylene, tetrafluoroethylene, chlorotrifluoroethylene, bromotrifluoroethylene, pentafluoropropylene, and hexafluoropropylene; various perfluoroalkyl-perfluorovinyl ethers and (per)fluoroalkyl vinyl ethers (note that the number of carbon atoms in the alkyl group is within a range of 1 to 18) such as trifluoromethyl trifluorovinyl ether, pentafluoroethyl trifluorovinyl ether, and heptafluoropropyl trifluorovinyl ether; and like various fluorine atom-containing monomers;
various alkyl vinyl ethers and substituted alkyl vinyl ethers, such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether, and phenylethyl vinyl ether;
various cycloalkyl vinyl ethers such as cyclopentyl vinyl ether, cyclohexyl vinyl ether, and methylcyclohexyl vinyl ether; various aliphatic vinyl carboxylates such as vinyl-2,2-dimethylpropanoate, vinyl-2,2-dimethylbutanoate, vinyl-2,2-dimethylpentanoate, vinyl-2,2-dimethylhexanoate, vinyl-2-ethyl-2-methylbutanoate, vinyl-2-ethyl-2-methylpentanoate, and vinyl-3-chloro-2,2-dimethylpropanoate, further as well as vinyl acetate, vinyl propionate, vinyl butyrate, vinyl isobutyrate, vinyl caproate, vinyl caprylate, vinyl caprate, vinyl laurate, C₉ branched aliphatic vinyl carboxylates, C₁₀ branched aliphatic vinyl carboxylates, C₁₁ branched aliphatic vinyl carboxylates, and vinyl stearate; and vinyl esters of carboxylic acids having a cyclic structure, such as vinyl cyclohexanecarboxylate, vinyl methylcyclohexanecarboxylate, vinyl benzoate, and vinyl p-tert-butylbenzoate.

Hydroxyl group-containing monomers are not particularly limited, and the following ones can be mentioned. Examples include various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, hydroxyethyl acrylamide, and 6-hydroxyhexyl vinyl ether; as well as addition reaction products of these various vinyl ethers listed above and ε-caprolactone;
various hydroxyl group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether, and 6-hydroxyhexyl (meth)allyl ether; as well as addition reaction products of these various allyl ethers listed above and ε-caprolactone; and
various hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, and polypropylene glycol mono(meth)acrylate; as well as addition reaction main components of these various (meth)acrylates listed above and ε-caprolactone.

In addition, it is preferable that a hydroxyl group-containing monomer as a monomer does not have a hydroxyl group directly, but has a hydroxyl group via a linking chain having 5 or more molecules because, in such a case, the hydroxyl group becomes more mobile in the resin, making the reaction easier to take place.

Further, a compound having both an unsaturated group and an epoxy group, such as glycidyl (meth)acrylate, which will be described in detail below, can also be used as a monomer.

In the invention, by combining the various monomers described above as necessary and polymerizing them, a compound having both a structure represented by the above general formula (1) and a hydroxyl group, a structural unit derived from a structure (a) represented by the above general formula (1), or a polymer having one or more functional groups selected from the group consisting of a hydroxyl group and an epoxy group can be obtained. Further, the above functional groups required for water solubilization can also be combined in the required proportions depending on the purpose and introduced into the resin.

The polymer is not particularly limited in its production method and can be produced through polymerization by a known method. More specifically, polymerization methods such as solution polymerization in an organic solvent, emulsion polymerization in water, mini-emulsion polymerization in water, aqueous solution polymerization, suspension polymerization, and UV curing can be mentioned.

In addition, in the case where solution polymerization in an organic solvent is performed, the polymer may subsequently be made aqueous by a known operation and thus converted into a form usable in an aqueous thermosetting resin composition.

In addition, side-chain functional groups of the polymer obtained by polymerizing a composition containing the above monomers may be allowed to react to introduce a hydroxyl group and/or a structure (a) represented by the above general formula (1) into the side chain. Reactions to the side chain are not particularly limited, and transesterification, a reaction with isocyanate, epoxy, or silane, a reaction with a melamine resin, an addition reaction, a hydrolysis reaction, dehydration condensation, a substitution reaction, and the like can be mentioned.

Further, an unsaturated group can be introduced into the side chain through the above reaction. Specifically, an unsaturated group can be introduced into the side chain through a reaction, such as a method in which after (meth)acrylic acid is copolymerized, glycidyl methacrylate is added, and an unsaturated group is introduced into the side chain of the resin through a reaction between the carboxyl group and the epoxy, or a method in which after hydroxymethacrylate is copolymerized, 2-isocyanatoethyl (meth)acrylate is added, and the hydroxyl group and the isocyanate group are allowed to react to introduce an unsaturated group. It is preferable that the thermosetting resin composition of the invention has a polymerizable unsaturated group because, as a result, it can be a dual-cure type curable resin composition that can be both heat-cured and energy ray-cured.

The molecular weight of the polymer is not particularly limited, and, for example, the weight average molecular weight can be 3,000 to 1,000,000. The upper limit of the weight average molecular weight is more preferably 300,000, still more preferably 100,000, and yet more preferably 50,000. The lower limit of the weight average molecular weight is more preferably 3,000, and still more preferably 4,000.

A water-soluble acrylic resin having a weight average molecular weight usually within a range of 5,000 to 100,000, preferably 5,000 to 50,000, or acrylic resin particles which are dispersoids in an acrylic resin emulsion having a weight average molecular weight of 50,000 or more, preferably 100,000 or more, can be mentioned.

The aqueous acrylic resin desirably contains a hydroxyl group and, from the viewpoint of water dispersibility, compatibility with other components, the curing properties of the formed coating film, and the like, preferably has a hydroxyl value generally within a range of 20 to 200 mgKOH/g, particularly 20 to 150 mgKOH/g. In addition, it is preferable that the aqueous acrylic resin has an acid value generally within a range of 1 to 100 mgKOH/g, particularly 10 to 70 mgKOH/g.

### (a-3) Compound having a structure represented by the following general formula (2)

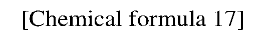

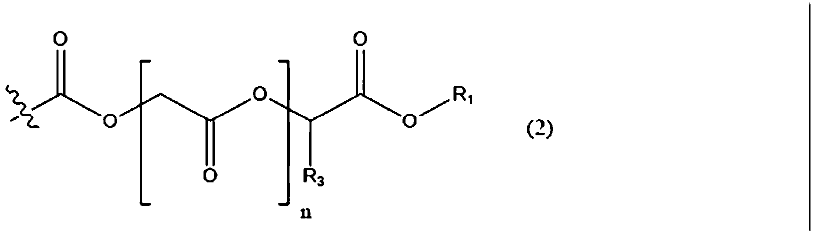

n = 0 to 20
R₁ is an alkyl group having 50 or less carbon atoms.
R₃ is hydrogen or an alkyl group having 10 or less carbon atoms.

As described above, a compound obtained by converting the carboxylic acid group of a compound having a carboxylic acid group into a structure represented by the above general formula (1) can also be used. Such a compound can be obtained by allowing a carboxylic acid or a derivative thereof to react with a compound represented by the above general formula (2). Incidentally, a compound having both a structure represented by formula (1) and an unsaturated group, which is used in the polymerization of the above (A-1), can also be used as a component of (A-2) in the form of an unsaturated group-containing compound.

In order to be used in the thermosetting resin composition of the invention, the compound preferably has two or more functional groups, and it is possible to use a polycarboxylic acid having two or more carboxyl groups, a hydroxycarboxylic acid having a carboxyl group and a hydroxyl group, and the like.

Various polycarboxylic acids are commonly used raw materials that are available widely and inexpensively for a large number of applications, including polyester raw materials, polyamide raw materials, neutralizing agents, synthetic raw materials, and others. A compound obtained by the alkyl esterification of such a polycarboxylic acid by a known method can also be used in the invention.

When such a compound is used as the compound having an alkyl ester group, esterification is possible inexpensively by a known method, and a polyvalent ester group can be introduced with a relatively low molecular weight. In addition, as a result of esterification, compatibility with organic solvents improves, allowing for favorable use; therefore, this is preferable.

The polycarboxylic acid used here is not particularly limited, and, for example, those having 50 or less carbon atoms can be used.

More specifically, aliphatic polycarboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid;
alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid;
fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; hydroxycarboxylic acids such as lactic acid, 3-hydroxybutanoic acid, and 3-hydroxy-4-ethoxybenzoic acid; and the like can be mentioned.

A compound obtained by substituting the carboxylic acid group of the above polycarboxylic acid with a structure represented by the above general formula (1) preferably has a molecular weight of 10,000 or less. As a result, molecules are more mobile, allowing curing to proceed; therefore, this is preferable. The molecular weight may also be lower, such as 6,000 or less, 4,000 or less, 2,000 or less, or 1,000 or less. The above molecular weight can be clarified by clarifying the chemical structure of the compound by a chemical analysis unit such as NMR. In addition, in the case of a mixture of several kinds of compounds having different values of n, it is necessary that the mixture partially contains a component having a molecular weight of 3,000 or less.

In the invention, as a favorable example of the compound having a structure represented by general formula (1), a compound represented by the following general formula (11) can be mentioned. 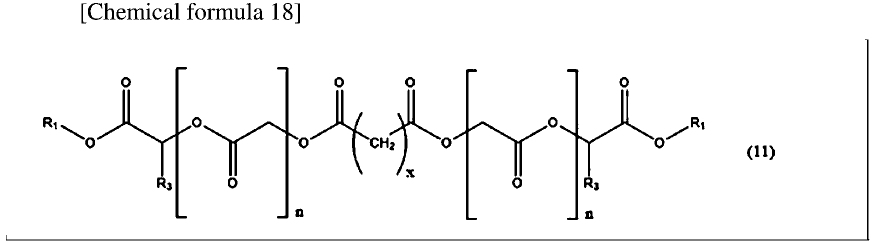
(R₁ is an alkyl group having 50 or less carbon atoms.
R₃ is hydrogen or an alkyl group having 10 or less carbon atoms.
x is 1 to 8
n = 0 to 20)

Further, it is also preferable that the compound having a structure represented by the above general formula (1) has a benzene ring. That is, this includes a compound having two or three carboxyl groups on a benzene ring, whose carboxyl group is substituted with a structure of the above general formula (1).

It is preferable that such a compound is used as a curing agent because, as a result, due to the presence of a benzene ring, a cured product having excellent heat resistance and strength can be obtained. As such carboxylic acids, phthalic acid, isophthalic acid, terephthalic acid, trimellitic acid, and the like can be mentioned. Among them, it is particularly preferable to use trimellitic acid. The chemical formula of a compound in which the carboxyl group of trimellitic acid is converted into a structure of general formula (1) is shown below as general formula (12). 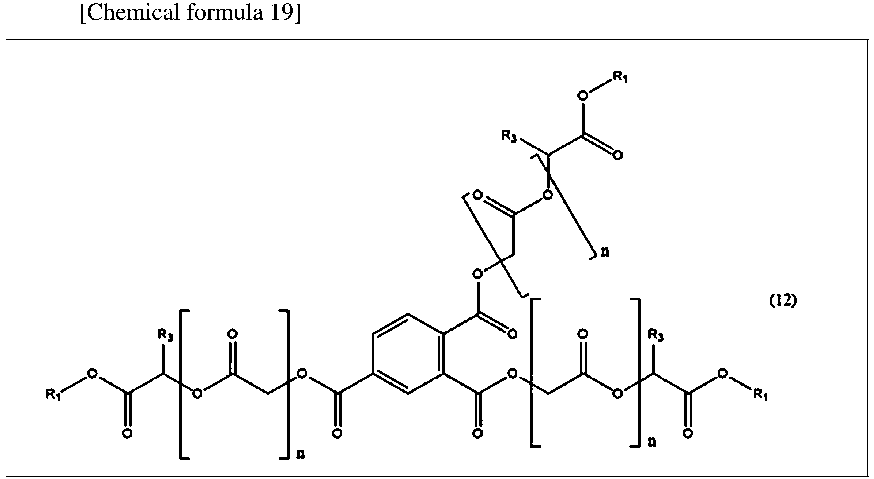
R₁ is an alkyl group having 50 or less carbon atoms.
R₃ is hydrogen or an alkyl group having 10 or less carbon atoms.
n = 0 to 20

Further, in the case where the carboxylic acid group in citric acid or a derivative thereof is a structure represented by the above general formula (2), such a structure is represented by

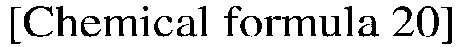

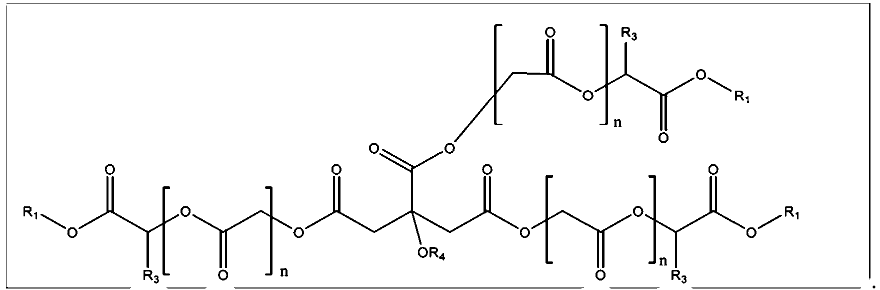

Incidentally, R₄ is not particularly limited and may be H or an alkyl group having 20 or less carbon atoms, and may also have an ester group, an ether group, an amide group, an amino group, urethane, aromatic, or an unsaturated group in the structure.

### (a-4) Compound having a structure represented by the following general formula (3) or (4)

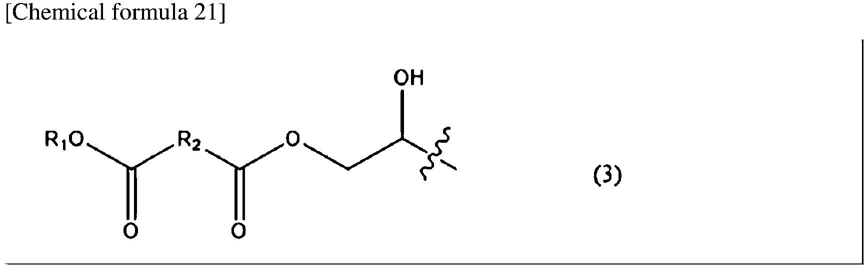

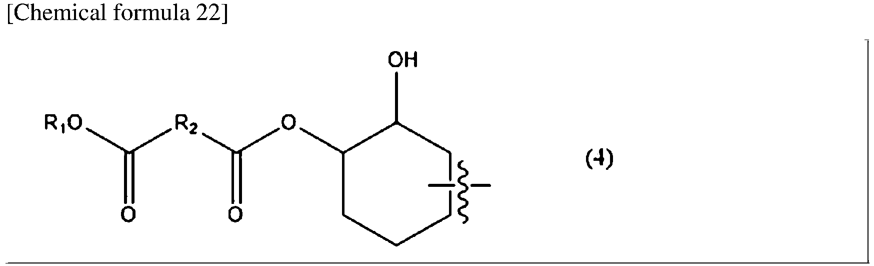

(In both of the above general formula (3) and general formula (4), R₁ is an alkyl group having 50 or less carbon atoms.
R₂ is an alkylene group having 50 or less carbon atoms and optionally partially containing oxygen atom(s) or nitrogen atom(s))

Such compounds are not particularly limited, and compounds obtained by allowing various carboxylic acids to react with a compound having an alkyl ester group and a carboxyl group to convert them into the above functional groups can be used. Carboxylic acids are not particularly limited, and the various carboxylic acids exemplified above in (a-3) can be mentioned.

### (a-5) Following general formula (5) and/or general formula (6):

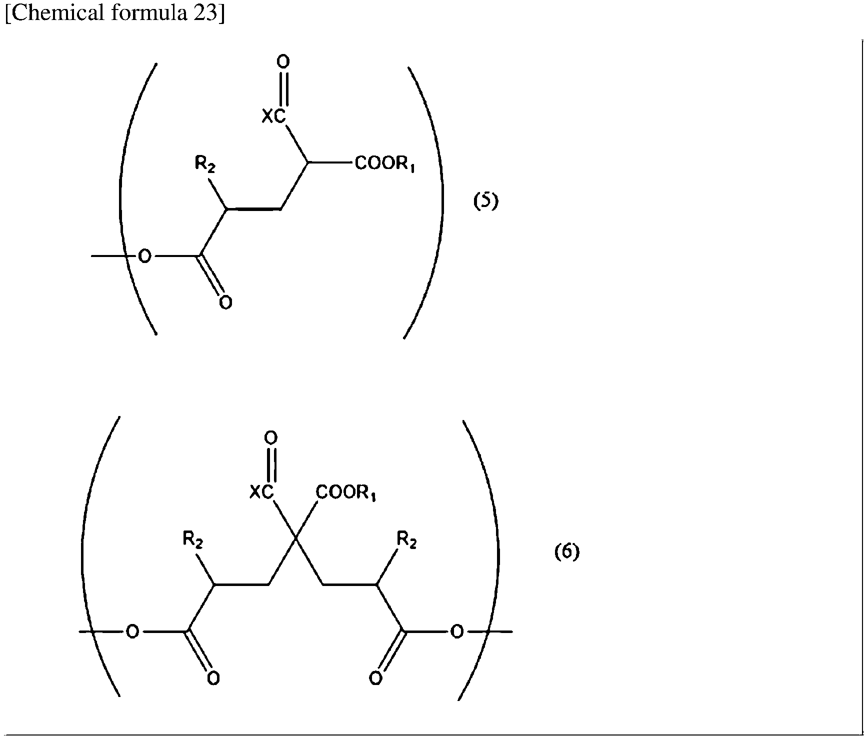

(R₁ represents a primary or secondary alkyl group. R₂ represents hydrogen or a methyl group. X represents a hydrocarbon group having 5 or less carbon atoms or an -OR₁ group.)

### (Epoxy Group)

The thermosetting resin composition of the invention has an epoxy group.

The epoxy group may exist in any form in the composition, and aliphatic, alicyclic, aromatic, or like any epoxy compound can be used. In addition, there also is no harm in using a compound having a functional group represented by the above general formula (1) and/or both a hydroxyl group and an epoxy group. Further, as a polymer, an epoxy group may be present as a functional group in polymer having a functional group represented by general formula (1) and/or a hydroxyl group and an epoxy group.

As representative examples of such epoxy groups, alicyclic epoxy compounds having a glycidyl group and a functional group represented by the following general formula (21): 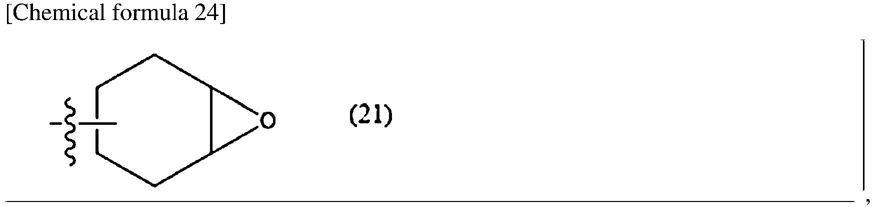 as well as other various known epoxy compounds, can be mentioned.

### (Compound Having Glycidyl Group)

As compounds having a glycidyl group, any known compounds, such as a polymer obtained using a compound having both a glycidyl group and a polymerizable unsaturated group, a compound having both a glycidyl group and a polymerizable unsaturated group, a bisphenol epoxy resin commonly used as a so-called epoxy resin, and a novolac type epoxy resin, can be used.

As compounds having both a glycidyl group and a polymerizable unsaturated group, for example, epoxy group-containing polymerizable unsaturated monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether can be mentioned. They can be used alone, and it is also possible to use a combination of two or more kinds. The polymerization method for a polymer using such a compound as a raw material is not particularly limited, and the polymer can be obtained by a known method.

In the invention, other known epoxy compounds can be used. For example, a glycidyl ether compound as represented by 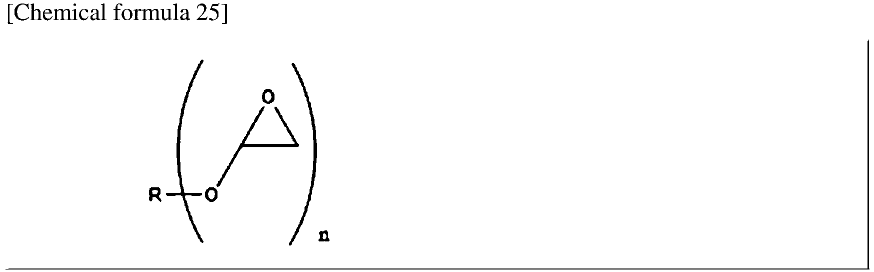 and the like can be mentioned. As such epoxy compounds, bisphenol A type epoxy resins, bisphenol F type epoxy resins, and the like can be mentioned.

For example, when epichlorohydrin is used, by allowing it to react with a phenol compound, a carboxylic acid compound, a hydroxyl group-containing compound, or the like, an epoxy group can be introduced into compounds with various skeletons. By subjecting such any epoxy compound to the above reaction, a compound having a functional group represented by the above general formula (41) can be obtained. The general formula of such a reaction is shown below.

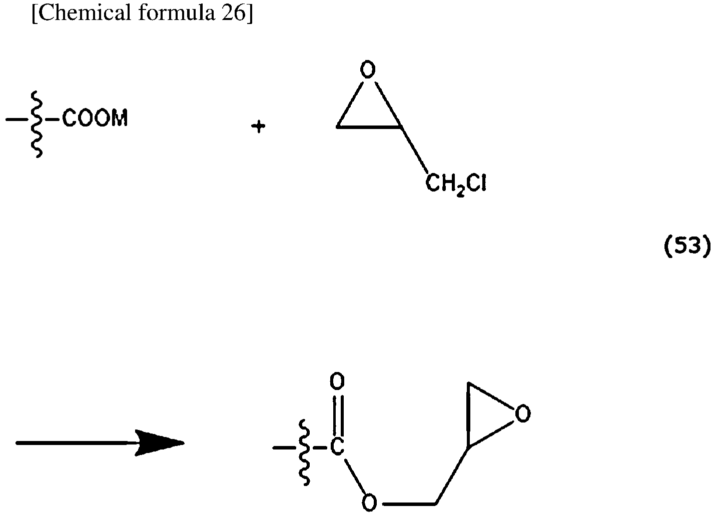

An alicyclic epoxy compound represented by the above general formula (21) can also be used. As such alicyclic epoxy compounds, vinylcyclohexene monoxide ("CELLOXIDE 2000 (manufactured by Daicel Chemical Industries, Ltd.)"), vinylcyclohexene dioxide ("ERL-4206 (manufactured by Union Carbide Corporation)"), limonene dioxide ("CELLOXIDE 3000 (manufactured by Daicel Chemical Industries, Ltd.)"), cyclohexene oxide, long-chain epoxy compounds ("UVR-6126 (manufactured by Union Carbide Corporation)", etc.), 3,4-epoxycyclohexylmethyl-3,4-epoxycyclohexanecarboxylate ("CYRACURE UVR-6110 (manufactured by Union Carbide Corporation)"), bis(3,4-epoxycyclohexyl) adipate ("CYRACURE UVR-6128 (manufactured by Union Carbide Corporation)", etc.), bis(3,4-epoxycyclohexylmethyl) adipate, bis(3,4-epoxycyclohexyl) ether, bis(3,4-epoxycyclohexylmethyl) ether, bis(3,4-epoxycyclohexyl) diethylsiloxane, epoxidized tetrahydrobenzyl alcohol ("ETHB" (manufactured by Daicel Chemical Industries, Ltd.)"), 3,4-epoxycyclohexylmethyl (meth)acrylate and caprolactone-modified products thereof ("CYCLOMER M100 (manufactured by Daicel Chemical Industries, Ltd.)", "CYCLOMER M101 (same)", "CYCLOMER A200 (same)", etc.), 1,2-bis(3,4-epoxycyclohexylmethyl)-4,5-epoxycyclohexanecarboxylate and caprolactone-modified products thereof ("EPOLEAD GT301 (manufactured by Daicel Chemical Industries, Ltd.)", "EPOLEAD GT302 (same)", etc.), 1,2,3,4-(3,4-epoxycyclohexylmethyl)tetracarboxylate and caprolactone-modified products thereof ("EPOLEAD GT401 (same)", "EPOLEAD GT403 (same)" etc.), and the like can be mentioned.

In addition, the compounds exemplified below can also be used.

Examples of monoepoxy compounds include, but are not limited to, butyl glycidyl ether, hexyl glycidyl ether, phenyl glycidyl ether, allyl glycidyl ether, para-tert-butylphenyl glycidyl ether, ethylene oxide, propylene oxide, para-xylyl glycidyl ether, glycidyl acetate, glycidyl butyrate, glycidyl hexoate, and glycidyl benzoate.

As polyepoxy compounds, for example, bisphenol type epoxy resins obtained by glycidylating bisphenols such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, and tetrafluorobisphenol A; epoxy resins obtained by glycidylating other dihydric phenols such as biphenol, dihydroxynaphthalene, and 9,9-bis(4-hydroxyphenyl)fluorene; epoxy resins obtained by glycidylating trisphenols such as 1,1,1-tris(4-hydroxyphenyl) methane and 4,4-(1-(4-(1-(4-hydroxyphenyl)-1-methylethyl)phenyl)ethylidene)bisphenol; epoxy resins obtained by glycidylating tetrakisphenols such as 1,1,2,2-tetrakis(4-hydroxyphenyl)ethane; novolac type epoxy resins obtained by glycidylating novolacs such as phenol novolac, cresol novolac, bisphenol A novolac, brominated phenol novolac, and brominated bisphenol A novolac; epoxy resins obtained by glycidylating polyhydric phenols, aliphatic ether type epoxy resins obtained by glycidylating polyhydric alcohols such as glycerin and polyethylene glycol; ether ester type epoxy resins obtained by glycidylating hydroxycarboxylic acids such as p-hydroxybenzoic acid and β-hydroxynaphthoic acid; ester type epoxy resins obtained by glycidylating polycarboxylic acids such as phthalic acid and terephthalic acid; glycidyl type epoxy resins including glycidylated products of amine compounds, such as 4,4-diaminodiphenylmethane and m-aminophenol, amine type epoxy resins such as triglycidyl isocyanurate, etc.; alicyclic epoxides such as 3,4-epoxycyclohexylmethyl-3',4'-epoxycyclohexanecarboxylate; and the like can be mentioned. They can be used alone, and it is also possible to use a combination of two or more kinds. Further, these epoxy compounds can also be emulsified or microencapsulated, and used.

### (Compound Containing Hydroxyl Group)

The resin component (A) of the invention indispensably contains a hydroxyl group. Here, the hydroxyl group may be present in the compound having a structure represented by general formula (1) or a compound having an epoxy group, and it is also possible to separately use a hydroxyl group-containing compound.

Hereinafter, compounds that can be used when a compound containing a hydroxyl group is blended separately from the compound having a structure represented by general formula (1) will be exemplified.

### (Acrylic Polyol)

Acrylic polymers using the hydroxyl group-containing monomer described above as part or all thereof can be favorably used in the invention. As such acrylic polyols, any known ones can be used.

### (Low Molecular Weight Polyol)

In addition, as a compound having at least two hydroxyl groups in the molecule, a low molecular weight polyol (specifically, the molecular weight is 2,000 or less) may be used.

As low molecular weight polyols (B-3), for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexane dimethanol, tricyclodecane dimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the above dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher hydric alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannitol; and the like can be mentioned.

Such low molecular weight polyols are known to be commonly used, and they are inexpensively available. Further, low molecular polyols have high water solubility and, in the case where water-based curing is intended, can be favorably used as crosslinking agents.

### (Polymerizable Unsaturated Functional Group)

The thermosetting resin composition of the invention may further have a polymerizable unsaturated functional group. When a polymerizable unsaturated functional group is present, the resin composition can be so-called dual-cure, which can be cured by both heat and energy rays. Such "dual cure" itself is known and is described in the above PTL 6, etc., for example. Meanwhile, as in the invention, with respect to a curing system having a functional group represented by general formula (1), an epoxy group, and a hydroxyl group, being dual-cure is a novel invention.

As described above, the curing system having a functional group represented by the general formula (1) of the invention, an epoxy group, and a hydroxyl group can achieve low-temperature curing. Then, because a component that obstructs energy ray curing through the polymerization of unsaturated bonds is not contained, this curing system can also be dual-cure.

Such a compound having a polymerizable unsaturated group may be a compound having a polymerizable unsaturated group in addition to at least one functional group selected from a functional group represented by the general formula (1) of the invention, an epoxy group, and a hydroxyl group, or may also be a compound having a polymerizable unsaturated group without these functional groups. It is also possible that the compound having a polymerizable unsaturated group, which is described in detail above as a monomer, is, while remaining in the monomer state, blended in the composition in addition to at least one functional group selected from a functional group represented by general formula (1), an epoxy group, and a hydroxyl group.

Further, a polymer having an unsaturated group introduced therein is also possible. As such a compound having a polymerizable unsaturated group, a compound having a (meth)acryloyl group is particularly preferable. Such compounds will be described in detail below.

### Compound Having (Meth)acryloyl Group (a)

As compounds having a (meth)acryloyl group (a), a large number of compounds known as energy ray-curable compounds can be used.

As examples of (meth)acrylates having one functional group, methyl (meth)acrylate, ethyl (meth)acrylate, isopropyl (meth)acrylate, n-butyl (meth)acrylate, iso-butyl (meth)acrylate, sec-butyl (meth)acrylate, t-butyl (meth)acrylate, and the like can be mentioned.

Examples of (meth)acrylates having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentyl glycol di(meth)acrylate, 1,6-hexanediol di(meth)acrylate, 1,9-nonanediol di(meth)acrylate, 1,10-decanediol di(meth)acrylate, glycerin di(meth)acrylate, dimethyloltricyclodecane di(meth)acrylate (DCP-A), EO adduct diacrylate of bisphenol A (manufactured by Kyoeisha Chemical Co., Ltd.; Light Acrylate BP-4EA, BP-10EA), and PO adduct diacrylate of bisphenol A (manufactured by Kyoeisha Chemical Co., Ltd.; BP-4PA, BP-10PA, etc.). Among them, PO adduct diacrylate of bisphenol A (manufactured by Kyoeisha Chemical Co., Ltd.; BP-4PA), dimethyloltricyclodecane di(meth)acrylate (DCP-A), and the like can be preferably used.

Examples of (meth)acrylates having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerinpropoxy tri(meth)acrylate, tris(2-(meth)acryloyloxyethyl)isocyanurate, and the like. Among them, trimethylolpropane trimethacrylate, pentaerythritol trimethacrylate, and the like can be preferably used.

Examples of (meth)acrylates having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, ditrimethylolpropane tetra(meth)acrylate, and the like. Among them, ditrimethylolpropane tetra(meth)acrylate, pentaerythritol tetra(meth)acrylate, and the like can be preferably used.

As examples of (meth)acrylates having four or more functional groups, polyfunctional (meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone-modified dipentaerythritol can be mentioned.

Further, a compound represented by the following general formula can also be used as a compound having an unsaturated group. 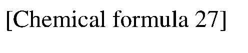 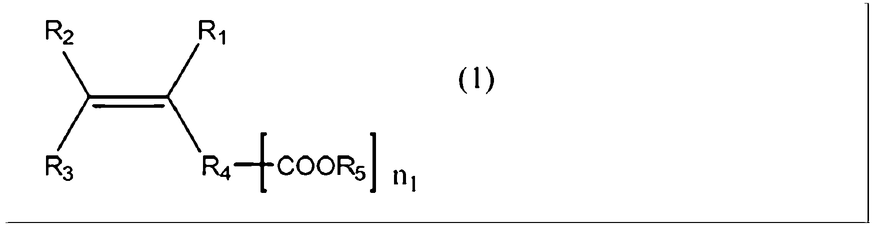
n₁: 1 to 10
(In the formula, R₁, R₂, and R₃ are the same or different and are each hydrogen, an alkyl group, a carboxyl group, an alkyl ester group, or a structure represented by the above R₄-[COOR₅]ₙ₁.
R₄ is an aliphatic, alicyclic, or aromatic alkylene group whose main chain has 50 or less atoms and which optionally has one or more functional groups selected from the group consisting of an ester group, an ether group, an amide group, and urethane in the main chain and optionally has a side chain.
R₅ is an alkyl group having 50 or less carbon atoms.

The R₄-[COOR₅]ₙ₁ group in the compound represented by general formula (1) may be a lactone structure represented by the following general formula (1-1).)

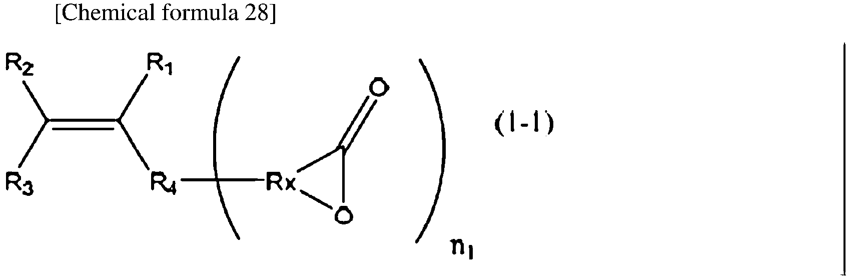

(Rx is a hydrocarbon group having 2 to 10 carbon atoms and optionally having a branched chain)

The above compound is a compound having both an unsaturated group and an alkyl ester group and is, for example, a known compound described in detail in PTL 6, etc., and they can be used.

Further, a compound having an unsaturated bond introduced therein by allowing a compound having an isocyanate group and an unsaturated bond to react with various polyol compounds, such as a vinyl-based polymer having a hydroxyl group, can be used.

Specifically, an unsaturated group-containing compound obtained by the reaction of 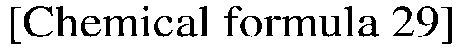 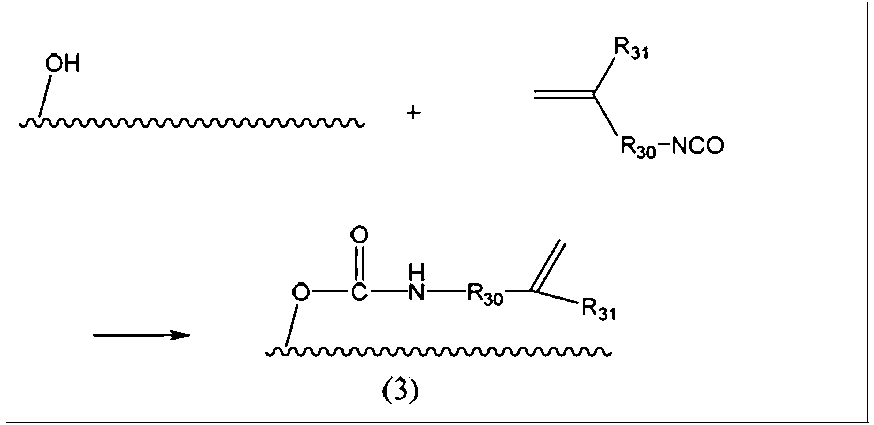 can also be used.

Compounds having an isocyanate group and a polymerizable unsaturated group that can be used in the above reaction are not particularly limited, and, for example, a compound represented by the following general formula (4) and the like can be mentioned. 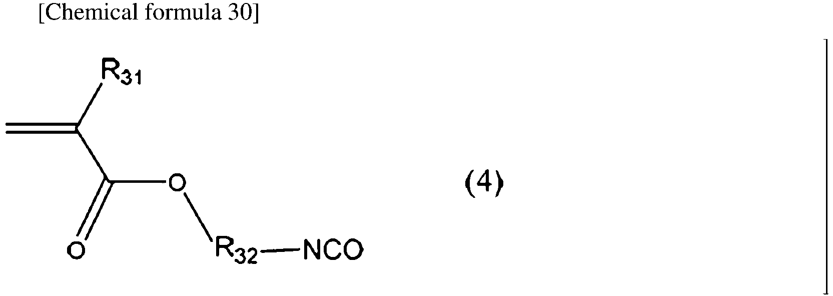
(In the formula, R₃₂ is a hydrocarbon group having 1 to 20 carbon atoms.
R₃₁ is H or a methyl group)

More specifically, 2-isocyanatoethyl acrylate sold under the trade name Karenz AOI^{®} by Showa Denko K.K., and the like can be mentioned.

The above polyol compounds are not particularly limited, and various hydroxyl group-containing compounds such as known acrylic polyols, polyester polyols, polycarbonate polyols, polyurethane polyols, and polymers having polyvinyl alcohol units can be used.

Further, a compound having an unsaturated group introduced therein by allowing (meth)acrylic acid to react with an epoxy group-containing polymer can also be used. Specifically, an unsaturated group-containing compound obtained by the reaction of 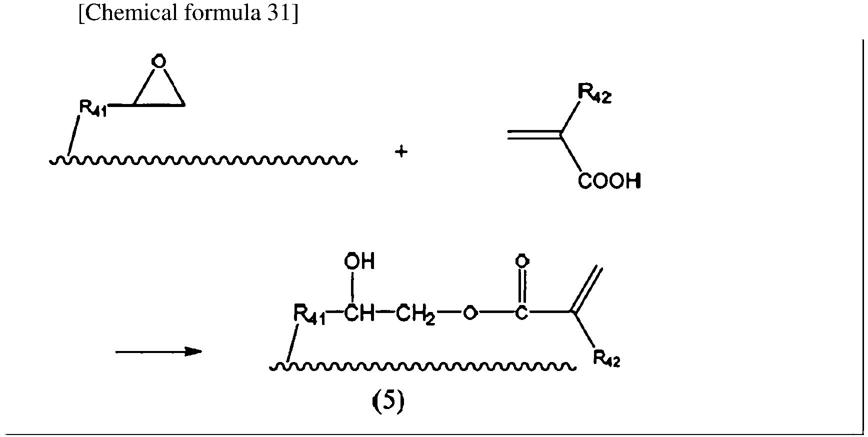 can also be used.

Epoxy-containing compounds that can be used in the above reaction are not particularly limited, and, in addition to various epoxy resins such as bisphenol-based epoxy epoxy resins and novolac-based epoxy resins, an acrylic polymer containing glycidyl (meth)acrylate as part of the monomer and the like can be mentioned.

Polymers represented by the above general formulas (4) and (5) may further have a hydroxyl group and/or an alkyl ester group.

### (Resin Composition)

The thermosetting resin composition of the invention has, as the entire composition, a structure (a) represented by the above general formula (1), an epoxy group (b), and a hydroxyl group (c). That is, it may be a composition having all of (a) to (c) in a single polymer, or it is also possible to use a mixture of compounds each having one or more of the functional groups (a) to (c).

### (Transesterification Catalyst (B))

The thermosetting resin composition of the invention contains a transesterification catalyst (B). That is, in order to efficiently cause a transesterification reaction between the ester group and the hydroxyl group and obtain sufficient thermosetting properties, a transesterification catalyst (B) is blended.

As the transesterification catalyst (B), any compound known to be capable of activating a transesterification reaction can be used. Specifically, for example, various acidic compounds such as hydrochloric acid, sulfuric acid, nitric acid, acetic acid, phosphoric acid or sulfonic acid, and heteropolyacids; various basic compounds such as LiOH, KOH, NaOH, amines, and phosphines; various metal compounds such as PbO, magnesium oxide, zinc acetate, zinc acrylate, zinc trifluoromethanesulfonate, lead acetate, manganese acetate, copper acetate, nickel acetate, palladium acetate, aluminum isopropylate, zirconium acetylacetonate, iron chloride, cobalt chloride, palladium chloride, zinc dithiocarbamate, antimony trioxide, tetraisopropyl titanate, dibutyltin dilaurate, dibutyltin dioctate, monobutyl stannoic acid, ytterbium trifluoromethanesulfonate, and scandium trifluoromethanesulfonate; quaternary ammonium salts and the like, such as tetramethylammonium chloride, dodecyltrimethylammonium bromide, triethylbenzylammonium chloride, tetramethylammonium hydroxide, and trimethylbenzylammonium methyl carbonate; phosphonium salts and the like, such as tetrabutylphosphonium bromide and tetrabutylphosphonium hydroxide; strong bases such as 1,8-diazabicyclo[5.4.0]-7-undecene; and the like can be mentioned. In addition, photoresponsive catalysts and thermally latent catalysts, which generate acids in response to light or heat, can also be used. Further, a zinc cluster catalyst (e.g., ZnTAC24 (trade name) manufactured by Tokyo Chemical Industry Co., Ltd.) and the like can also be used. Further, a combination of two or more kinds of the above compounds may also be used.

In the thermosetting resin composition of the invention, it is more preferable to use, as a catalyst, at least one compound selected from the group consisting of metal compounds containing a metal other than an alkali metal and basic catalysts. Further, it is most preferable to use a metal compound (B-1) containing a metal other than an alkali metal as part or all of the catalyst. In the thermosetting resin composition of the invention, the metal compound is particularly excellent from the viewpoint of catalytic activity. In addition, with respect to a water-insoluble catalyst, it may be formed into a dispersion, or may also be dissolved in a water-soluble solvent and added. This tendency is particularly noticeable in a thermosetting resin composition having a primary or secondary alkyl ester group. In addition to the metal compound (B-1), further, it is preferable that at least one compound (B-2) selected from the group consisting of organic phosphorus compounds, urea, alkylated ureas, thiourea, alkylated thioureas, sulfoxide compounds, quaternary ammonium compounds, quaternary phosphonium compounds, amine compounds, pyridine, quinoline, isoquinoline, phenanthroline, imidazole compounds, and derivatives thereof is contained. Hereinafter, these compounds will be described in detail.

The organic phosphorus compounds are not particularly limited, and, for example, phosphoric acid, phosphorous acid, phosphonic acid, phosphinic acid, phosphonous acid, organic phosphine oxides, and organic phosphine compounds, as well as various esters, amides, and salts thereof, can be mentioned. The esters may be alkyl, branched alkyl, substituted alkyl, difunctional alkyl, alkyl ether, aryl, or substituted aryl esters. The amides can be alkyl, branched alkyl, substituted alkyl, difunctional alkyl, alkyl ether, aryl, or substituted aryl amides.

Among them, it is particularly preferable to use at least one compound selected from the group consisting of phosphonic acid esters, phosphoric acid amides, and organic phosphine oxide compounds. Use of these organic phosphorus compounds leads to the best transesterification catalyst function. Still more specifically, organic phosphine oxide compounds such as triphenylphosphine oxide, trioctylphosphine oxide, and tricyclohexylphosphine oxide; phosphoric acid amide compounds such as hexamethyl phosphoric acid triamide and tris(N,N-tetramethylene) phosphoric acid triamide; organic phosphine sulfide compounds such as triphenylphosphine sulfide, tributylphosphine sulfide, and trioctylphosphine sulfide; and the like can be favorably used.

The alkylated ureas are not particularly limited, and urea, dimethyl urea, dimethyl propylene urea, and the like can be mentioned. Incidentally, those having a cyclic structure, such as dimethylpropylene urea, are also possible.

The alkylated thioureas are not particularly limited, and dimethylthiourea, trimethylthiourea, tetramethylthiourea, diethylthiourea, dibutylthiourea, and the like can be mentioned. As the sulfoxide compounds, dimethyl sulfoxide, diphenyl sulfoxide, and the like can be mentioned.

As quaternary ammonium compounds, compounds represented by the following general formula (i) are favorably used. 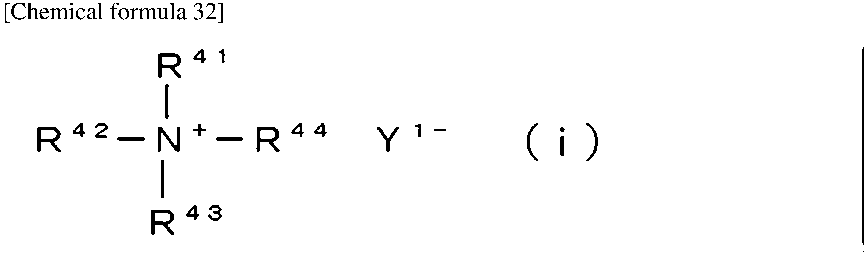 (Note that in formula (i), R41 to R44 each independently represent a monovalent hydrocarbon group or a monovalent hydrocarbon group having bonded thereto a functional group that is inert to the reaction, and Y1- represents a monovalent anion.)

In the case where R⁴¹ to R⁴⁴ are hydrocarbon groups, examples thereof include an alkyl group, a cycloalkyl group, an alkenyl group, a cycloalkenyl group, and an aryl group, and an alkyl group and an aryl group are preferable. The number of carbon atoms in each of R⁴¹ to R⁴⁴ is preferably 1 to 100, and more preferably 4 to 30. R⁴¹ to R⁴⁴ may be the same group or different groups.

In the case where R⁴¹ to R⁴⁴ are monovalent hydrocarbon groups having bonded thereto a functional group that is inert to the reaction, the functional group is suitably selected depending on the reaction conditions, and a halogen atom, an alkoxycarbonyl group, an acyloxy group, a nitrile group, an acyl group, a carboxyl group, an alkoxyl group, and the like can be mentioned.

As the quaternary ammonium (R⁴¹R⁴²R⁴³R⁴⁴N⁺) in the above formula (i), tetramethylammonium, tetraethylammonium, tetra-n-propylammonium, tetra-n-butylammonium, methyltri-n-octylammonium, n-dodecyltrimethylammonium, n-dodecyltri-n-butylammonium, cetyltrimethylammonium, trimethylbenzylammonium, triethylbenzylammonium, cetylbenzyldimethylammonium, trimethyl-2-hydroxyethanaminium, cetylpyridinium, n-dodecylpyridinium, phenyltrimethylammonium, phenyltriethylammonium, N-benzylpicolinium, pentamethonium, hexamethonium, and the like can be mentioned.

As Y¹⁻ in the above general formula (i), a fluorine ion, a chloride ion, a bromide ion, an iodide ion, a sulfate ion, a nitrate ion, a phosphate ion, a perchlorate ion, a hydrogen sulfate ion, a hydroxide ion, an acetate ion, a benzoate ion, a benzenesulfonate ion, a p-toluenesulfonate ion, and the like can be mentioned, a fluorine ion, a chloride ion, a bromide ion, an iodide ion, a hydroxide ion, and an acetate ion are preferable, a fluorine ion, a chloride ion, a bromide ion, an iodide ion, and a hydroxide ion are more preferable, and a chloride ion and a bromide ion are still more preferable.

As a compound represented by the above general formula (i), from the viewpoint of versatility and reactivity, a combination of the following quaternary ammonium (R⁴¹R⁴²R⁴³R⁴⁴N⁺) and Y¹⁻ is preferable.

Quaternary ammonium (R⁴¹R⁴²R⁴³R⁴⁴N⁺): Tetramethylammonium, tetra-n-butylammonium, n-dodecyltrimethylammonium, n-dodecyltri-n-butylammonium, triethylbenzylammonium, trimethyl-2-hydroxyethanaminium.

Y¹⁻: fluorine ion, chloride ion, bromide ion, iodide ion, hydroxide ion, acetate ion.

In terms of reactivity, industrial availability and cost, ease of handling, and the like, the quaternary ammonium compound is preferably at least one member selected from the group consisting of tetramethylammonium chloride, tetra-n-butylammonium fluoride, tetra-n-butylammonium iodide, tetra-n-butylammonium hydroxide, tetra-n-butylammonium acetate, n-dodecyltrimethylammonium bromide, n-dodecyltri-n-butylammonium bromide, triethylbenzylammonium chloride, and trimethyl-2-hydroxyethanaminium chloride (choline chloride).

As the quaternary phosphonium compounds, compounds represented by the following general formula (ii) can be mentioned. 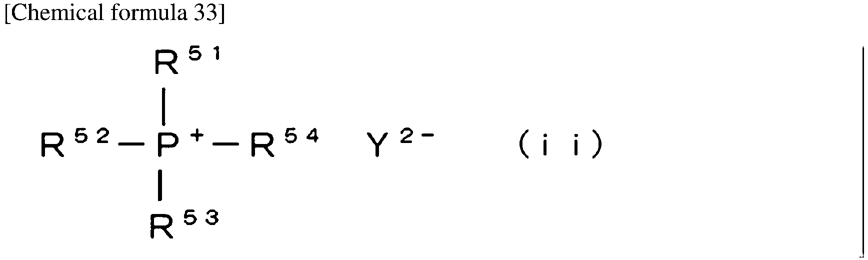 (Note that in formula (ii), R⁵¹ to R⁵⁴ each independently represent a monovalent hydrocarbon group, and Y²⁻ represents a monovalent anion. R⁵¹ to R⁵⁴ may be the same group or different groups.)

As the hydrocarbon group in R⁵¹ to R⁵⁴, an alkyl group, a cycloalkyl group, an alkenyl group, a cycloalkenyl group, an aryl group, and the like can be mentioned, and an alkyl group and an aryl group are preferable.

As the quaternary phosphonium (R⁵¹R⁵²R⁵³R⁵⁴P⁺) in the above general formula (ii), tetraethylphosphonium, tetra-n-butylphosphonium, ethyltri-n-octylphosphonium, cetyltriethylphosphonium, cetyltri-n-butylphosphonium, n-butyltriphenylphosphonium, n-amyltriphenylphosphonium, methyltriphenylphosphonium, benzyltriphenylphosphonium, tetraphenylphosphonium, and the like can be mentioned.

In terms of reactivity and industrial availability, the quaternary phosphonium compound is preferably at least one member selected from the group consisting of tetra-n-butylphosphonium hydroxide, tetrabutylphosphonium bromide, and tetrabutylphosphonium chloride.

As Y²⁻, a chloride ion, a fluorine ion, a bromide ion, an iodide ion, a sulfate ion, a nitrate ion, a phosphate ion, a perchlorate ion, a hydrogen sulfate ion, a hydroxide ion, an acetate ion, a benzoate ion, a benzenesulfonate ion, a p-toluenesulfonate ion, and the like can be mentioned, and a fluorine ion, a chloride ion, a bromide ion, and a hydroxide ion are preferable.

As the imidazole compounds, compounds represented by the following general formula are favorable. 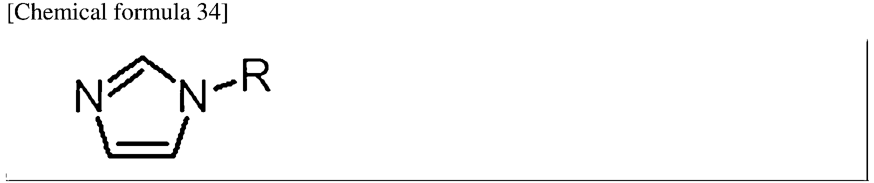 (In the formula, R is an alkyl group, an alkenyl group, or an aromatic substituent having 10 or less carbon atoms and optionally having a branched structure or a ring structure.)

As compounds represented by the above general formula, specifically, 1-methylimidazole, 1-ethylimidazole, 1-propylimidazole, 1-butylimidazole, 1-vinylimidazole, and the like can be mentioned. Among them, 1-methylimidazole is preferable in terms of production cost.

As the pyridine derivatives, dimethylaminopyridine, quinoline, isoquinoline, nicotinic acid esters, and the like can be mentioned.

As the quinoline derivatives, 8-hydroxyquinoline, 2-methyl-8-quinolinol, and the like can be mentioned.

The amine compounds may be primary, secondary, or tertiary, and 1,4-piperidine, dimethylethanolamine, diazabicycloundecene, diazabicyclononene, aminopyridine, 4-dimethylaminopyridine, triethylenediamine, dimethyloctylamine, N,N,N-tetramethylethylenediamine, N,N-dimethylcyclohexylamine, 1-azabicyclo[2,2,2]octane, 1-azabicyclo[2,2,2]octan-3-ol, bis(2-dimethylaminoethyl) ether 1,4-diazabicyclo[2.2.2]octan-2-ylmethanol, and the like can be mentioned.

The transesterification catalyst preferably contains the compound (B-1) and the compound (B-2) in the following proportions: (B-1):(B-2) = 100:1 to 1:100 (weight ratio). As a result of blending in such proportions, particularly favorable results can be obtained. The lower limit is more preferably 50:1, and still more preferably 10:1. The upper limit is more preferably 1:50, and still more preferably 1:10.

The compound (B-1) is preferably contained in a proportion of 0.01 to 50 wt% based on the amount of compounds involved in a reaction in the reaction system at the time of causing the reaction. The compound (B-2) is preferably contained in a proportion of 0.01 to 50 wt% based on the amount of compounds involved in a reaction in the reaction system at the time of causing the reaction.

In the resin composition of the invention, the above physical properties can be particularly favorably obtained by a method in which the transesterification catalyst (B) used is (1) a zirconium compound or (2) the above compound (B-1) and compound (B-2); therefore, this is preferable. When the transesterification catalyst (1) or (2) is used, and a resin composition having particularly high transesterification reactivity is selected and used, a thermosetting resin composition with the property of having a cure onset temperature of 130°C or less and also having, when cured under conditions of baking at 150°C or less for 30 minutes, a gel fraction of 80% or more can be obtained.

In the resin composition of the invention, it is also preferable to use a basic compound (B-3) as the transesterification catalyst (B). The basic compound (B-3) is not particularly limited, and an amine compound and the like can be favorably used.

The amine compound that can be used as the basic compound (B-3) may be primary, secondary, or tertiary, and 1,4-piperidine, dimethylethanolamine, diazabicycloundecene, diazabicyclononene, aminopyridine, 4-dimethylaminopyridine, triethylenediamine, dimethyloctylamine, N,N,N-tetramethylethylenediamine, N,N-dimethylcyclohexylamine, N,N,N'N' pentamethyldiethylenetriamine, 1,4-diazabicyclo[2.2.2]octan-2-ylmethanol, N,N,N'N'-trimethylhexane-1,6-diamine, bis(2-dimethylaminoethyl) ether, ethylene glycol bis(3-dimethylaminopropyl ether, 1-azabicyclo[2.2.2]octane, 1-azabicyclo[2,2,2]octan-3-ol, N,N,N'N'N"N"-hexamethyltripropylenetetramine, and the like can be mentioned.

Among them, tertiary amines and quaternary ammonium salts are particularly preferable.

In the invention, it has become clear that when an epoxy compound is contained, reactivity in a transesterification reaction using a basic catalyst noticeably improves. Accordingly, even in the case where only the basic compound (B-3) is used as a catalyst without using the above metal catalyst, excellent low-temperature curing performance is exhibited; therefore, this is preferable.

The invention also provides a thermosetting resin composition containing: resin components (A) and (B) having -COOR (R is an alkyl group having 50 or less carbon atoms) and a hydroxyl group; and the transesterification catalyst (2) described above as a transesterification catalyst (B).

Further, when zinc acetylacetonate is used as a transesterification catalyst, and a resin composition having particularly high transesterification reactivity is selected and used, a thermosetting resin composition with the property of having a cure onset temperature of 100°C or less and also having, when cured under conditions of baking at 100°C or less for 30 minutes, a gel fraction of 80% or more can be obtained.

The amount of the transesterification catalyst (B) used is preferably 0.01 to 50 wt% based on the total weight of the resin components (A) and (B). Within such a range, a good curing reaction can be performed at a low temperature; therefore, this is preferable.

In addition, in the case where the thermosetting resin composition is an aqueous composition, such a catalyst is preferably a water-soluble compound or a water-soluble dispersion or emulsion. From the above viewpoint, water-soluble catalysts that can be favorably used in the invention are not particularly limited, and tetramethylammonium chloride, dodecyltrimethylammonium bromide, triethylbenzylammonium chloride, tetramethylammonium hydroxide, trimethylbenzylammonium methyl carbonate, zinc acetate, zinc acrylate, 1,8-diazabicyclo[5.4.0]-7-undecene, dibutyltin dilaurate, and the like can be mentioned.

### (Photopolymerization Initiator (B-4))

In the case where the curable resin composition of the invention has an unsaturated bond, it preferably contains a photopolymerization initiator. As a result, a composition having both thermosetting performance and energy ray curing performance can be obtained.

Photopolymerization initiators are not particularly limited, and, for example, acetophenone-based initiators such as 1-hydroxycyclohexyl phenyl ketone, 2-hydroxy-2-methyl-1-phenylpropan-1-one, 2-methyl-1-[4-(methylthio)phenyl]-2-morpholinopropan-1-one, and 1-[4-(2-hydroxyethoxy)phenyl]-2-hydroxy-2-methyl-1-propan-1-one; benzoin-based initiators such as benzoin and 2,2-dimethoxy-1,2-diphenylethan-1-one; benzophenone-based initiators such as benzophenone, [4-(methylphenylthio)phenyl]phenylmethanone, 4-hydroxybenzophenone, 4-phenylbenzophenone, and 3,3',4,4'-tetra(t-butylperoxycarbonyl)benzophenone; thioxanthone-based initiators such as 2-chlorothioxanthone and 2,4-diethylthioxanthone; and the like can be mentioned. As accelerators, for example, tertiary amines such as p-dimethylaminobenzoic acid ethyl ester, p-dimethylaminobenzoic acid isoamyl ester, and the like can be mentioned. The content of the photopolymerization initiator (B-4) is not particularly limited, but it is preferably blended in a proportion of 0.01 to 50 wt% based on the solids weight of the resin component (A). Considering the coloration and physical properties of the coating film, storage stability, and the like, the content is more preferably 0.5 to 10 wt%.

In the thermosetting composition of the invention, in addition to the components (A) and (B) described above, additional crosslinking agents generally used in the fields of coating materials and adhesives may further be used. Crosslinking agents that can be used are not particularly limited, and an isocyanate compound, a blocked isocyanate compound, a melamine resin, an epoxy resin, a silane compound, and the like can be mentioned. In addition, vinyl ether, an anionically polymerizable monomer, a cationically polymerizable monomer, a radically polymerizable monomer, and the like may also be used together. A curing agent for accelerating the reaction of these crosslinking agents used together may also be used together.

Incidentally, the additional crosslinking agents described above are not indispensable. The thermosetting resin composition of the invention is preferable in that even when they are not contained, good curing properties can be obtained.

In the case where the crosslinking agent is a polyisocyanate compound and/or a melamine resin, the blending amount thereof based on the total amount of the resin component (A) and the crosslinking agent (i.e., (crosslinking agent amount)/(crosslinking agent amount + resin component amount) is preferably 0.01 to 50 wt%. Within such a blending amount range, a curing reaction through a transesterification reaction and a curing reaction by other curing agents are simultaneously caused; therefore, this is preferable.

The lower limit is more preferably 0.01 wt%, and still more preferably 1 wt%. The upper limit is more preferably 30 wt%, and still more preferably 20 wt%.

The thermosetting resin composition of the invention may be either an aqueous thermosetting resin composition or a solvent-based thermosetting resin composition. Further, it may also be a thermosetting resin composition having a solid behavior, such as a powder coating material.

It is particularly preferable that the thermosetting resin composition of the invention is an aqueous thermosetting resin composition because, in such a case, low-temperature curing performance can be sufficiently obtained. That is, in a known aqueous thermosetting resin composition whose curing reaction is a transesterification reaction, the reactivity tends to decrease when a -COOH group is present. Therefore, in the case where the resin is made aqueous by introducing a -COOH group therein, it has been impossible to cause a sufficient curing reaction unless the curing properties are increased by enhancing the curing reaction or a like method.

However, the compound having an alkyl ester group represented by general formula (1) can undergo a curing reaction at a relatively low temperature even in the presence of a -COOH group. Therefore, it can also be favorably used as an aqueous thermosetting resin composition.

As such aqueous thermosetting resin compositions, the following methods are generally known.
(a) A method for making a resin composition aqueous by using a water-soluble or water-dispersible component.
(b) A method for making a resin composition aqueous by emulsifying a water-insoluble component in water with an emulsifier.

Thus, these methods will each be described in detail. Incidentally, it is also possible that of the components contained in the aqueous thermosetting resin composition, some of the components are made aqueous by the method (a), and the other components are made aqueous by the method (b).

### (a) Method for making a resin composition aqueous by using a water-soluble or water-dispersible component.

In such a method, the resin composition is made aqueous by using a water-soluble or water-dispersible component as the coating film-forming organic component itself. Use of such a method is preferable in that a coating material composition that does not use a surfactant can be obtained.

The resin used in the above mode (a) is not particularly limited, and it is possible to use a resin that has an acid group, such as at least one functional group selected from the group consisting of a carboxylic acid group, a sulfonic acid group, a sulfuric acid group, and a phosphoric acid group, and has been water-solubilized by such an acid group being neutralized with ammonia and/or an amine compound and thus converted into a hydrophilic group. In addition, water-soluble compounds, which are compounds described in detail below, may also be used. Among them, a carboxylic acid group is preferable from the viewpoint of being inexpensive, etc.

The resin having an acid group can be obtained by performing a known polymerization reaction using a monomer at least partially having these functional groups in an organic solvent. Subsequently, water and an amine and/or ammonia can be added to cause neutralization, thereby making the resin composition aqueous.

In this way, in the case where a resin composition is made aqueous by neutralizing an acid group, among various resins, generally, an acrylic-based polymer, a polyester resin, and a urethane resin can be most favorably used. In order to introduce a functional group having the above acidic group into an acrylic resin, it is preferable to perform a polymerization reaction using a polymerizable monomer having an acid group as part of its raw material.

In such a method, those usable as the monomer having an acid group are not particularly limited, and usable monomers can be selected depending on the type of resin. For example, (meth)acrylic acid, 2-methacryloyloxyethyl succinic acid, maleic acid, crotonic acid, β-carboxyethyl acrylate and like unsaturated group-containing carboxylic acid compounds, toluenesulfonic acid, 2-acrylamido-2-methylpropanesulfonic acid, 2-methacryloyloxyethyl acid phosphate, and the like can be mentioned.

In the above polymer, such an acid group is preferably introduced such that the resulting resin acid value is within a range of 0.1 to 100. The lower limit of the acid value is preferably 0.5, and still more preferably 1. The upper limit of the acid value is preferably 50, and still more preferably 30.

As the amine compound, for example, tertiary amines such as triethylamine, tributylamine, dimethylethanolamine, and triethanolamine; secondary amines such as diethylamine, dibutylamine, diethanolamine, and morpholine; primary amines such as propylamine, ethanolamine, and dimethylethanolamine; quaternary ammoniums such as ammonia; and the like can be mentioned. In the case where an epoxy is used together, because primary and secondary amines react therewith, tertiary amines and quaternary amines are preferable.

In the case where the amine compound is used, the amount thereof used is preferably within a range of usually 0.1 to 1.5 molar equivalents with respect to the carboxyl groups in the unsaturated carboxylic acid or acid anhydride-modified polyolefin.

In the case where a resin composition is made aqueous by the above method, the method may be such that a resin is obtained by a usual method such as solution polymerization, and then water and an amine compound are added, followed by stirring.

### (b) Method for making a resin composition aqueous by emulsifying a component in water with an emulsifier.

Unlike the above, a resin composition may also be made aqueous by emulsifying a resin with an emulsifier.

In this case, the resin may be one obtained by emulsion polymerization, and it is also possible that the resin is obtained by solution polymerization or the like and emulsified with an emulsifier. Further, as the emulsifier, a reactive emulsifier may be used.

As the anionic reactive emulsifiers, for example, sodium salts, amine salts, and ammonium salts of sulfonic acid compounds having a polymerizable unsaturated group such as a (meth)allyl group, a (meth)acrylic group, a propenyl group, or a butenyl group, etc., can be mentioned. Among them, ammonium salts of sulfonic acid compounds having a polymerizable unsaturated group are preferable because the resulting coating film has excellent water resistance. As commercially available products of the ammonium salts of sulfonic acid compounds, for example, LATEMUL S-180A (manufactured by Kao Corporation, trade name), AQUALON KH10 (DKS Co., Ltd., trade name), and the like can be mentioned.

In addition, examples of nonionic reactive emulsifiers include those having a polymerizable unsaturated group, such as a (meth)allyl group, a (meth)acrylic group, a propenyl group, or a butenyl group, and having added thereto ethylene oxide or propylene oxide.

In addition, among the above ammonium salts of sulfonic acid compounds having a polymerizable unsaturated group, ammonium salts of sulfuric acid ester compounds having a polymerizable unsaturated group and a polyoxyalkylene group are more preferable. As commercially available products of the ammonium salts of sulfuric acid ester compounds having a polymerizable unsaturated group and a polyoxyalkylene group, for example, AQUALON KH-10 (manufactured by DKS Co., Ltd., trade name), SR-1025A (manufactured by Asahi Denka Kogyo K.K., trade name), and the like can be mentioned.

The concentration of the emulsifier is preferably within a range of usually 0.1 to 10 mass%, particularly 1 to 5 mass%, based on the total amount of the radically polymerizable unsaturated monomers used.

An emulsified resin obtained by emulsion polymerization using a reactive emulsifier is advantageous in that because the emulsifier is incorporated into the resin, inconveniences caused by the presence of an emulsifier are not caused. Therefore, in applications where the presence of an emulsifier is problematic, an emulsified resin obtained by such a method is preferably used.

As emulsifiers other than the above reactive emulsifiers, for example, nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate, and polyoxyethylene sorbitan monolaurate; anionic emulsifiers such as sodium salts and ammonium salts of alkylsulfonic acids, alkylbenzenesulfonic acids, and alkylphosphoric acids; and the like can be mentioned. Further, polyoxyalkylene group-containing anionic emulsifiers having an anionic group and a polyoxyalkylene group such as a polyoxyethylene group or a polyoxypropylene group in one molecule, reactive anionic emulsifiers having such an anionic group and a polymerizable unsaturated group in one molecule, and the like can also be used. In addition, polymer emulsifiers, quaternary ammonium salts, and the like can also be used. They can be used alone, and it is also possible to use a combination of two or more kinds.

The amount of the emulsifier used is preferably within a range of usually 30 parts by mass or less, particularly 0.5 to 25 parts by mass, per 100 parts by mass of the solids mass of the unsaturated carboxylic acid or acid anhydride-modified polyolefin (i).

In addition, in the case where a resin obtained by emulsion polymerization is used, the emulsion polymerization method is not particularly limited, and it can be performed by a known general method. In addition, the emulsifier may be the reactive emulsifier described above or a general emulsifier.

Also in the case where a method in which a resin obtained by a general method, such as solution polymerization in an organic solvent, is emulsified with an emulsifier is employed, the specific technique therefor is not particularly limited, and it can be performed by a known general method. As emulsifiers that can be used in this case, those that can be used in emulsion polymerization described above can be mentioned.

In addition, in the case where various ester compounds or polyhydric alcohols that are insoluble in water, which will be described in detail below, are used, water-solubilization is possible by applying a known method, such as a method in which they are emulsified with an emulsifier, or a method in which they are solubilized by using, in addition to water, a highly water-miscible organic solvent such as an alcohol. As highly water-miscible organic solvents that can be used in this method, methanol, ethanol, isopropyl alcohol, butyl alcohol, butyl cellulose, ether-based solvents, ketone-based solvents, and the like can be mentioned.

The thermosetting resin composition of the invention can be favorably used in the fields of thermosetting coating materials, thermosetting adhesives, and the like.

The thermosetting resin composition of the invention may contain, in addition to water, an aqueous solvent that can be mixed with water in any ratio, such as ethanol, methanol, an alcohol-based solvent, a glycol-based solvent, an ether-based solvent, or a ketone-based solvent.

In the case where it is used as a thermosetting coating material, in addition to the above components, additives generally used in the coating material field may also be used together. For example, leveling agents, antifoaming agents, reactive diluents, non-aqueous dispersions (NADs), coloring pigments, extender pigments, bright pigments, pigment dispersants, rheology control agents, antioxidants, and UV absorbers, as well as any combinations thereof, may be used together.

When a pigment is used, it is preferable that the total pigment amount contained is preferably within a range of 1 to 500 wt% based on 100 wt% of the total resin component solids. The lower limit is more preferably 3 wt%, and still more preferably 5 parts by weight. The upper limit is more preferably 400 wt%, and still more preferably 300 wt%.

As the coloring pigments, for example, titanium oxide, zinc white, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments, and the like, as well as any combinations thereof, can be mentioned.

As the extender pigments, for example, clay, kaolin, barium sulfate, barium carbonate, calcium carbonate, talc, silica, alumina white, and the like can be mentioned. Barium sulfate and/or talc is preferable, and barium sulfate is more preferable.

As the bright pigments, for example, aluminum (including vapor-deposited aluminum), copper, zinc, brass, nickel, aluminum oxide, mica, aluminum oxide coated with titanium oxide or iron oxide, mica coated with titanium oxide or iron oxide, glass flakes, hologram pigments, and the like, as well as any combinations thereof, can be mentioned. The aluminum pigments include non-leafing aluminum and leafing aluminum.

When blended into the thermosetting resin composition, the coloring pigment is preferably in the state of being dispersed with a pigment dispersion resin. The amount of coloring pigment may vary depending on the kind of pigment and the like, but is generally, per 100 parts by mass of resin component solids contained in the pigment dispersion resin, preferably within a range of about 0.1 to about 300 parts by mass, and more preferably about 1 to about 150 parts by mass.

The thermosetting coating material may further contain additives for coating materials as desired, such as organic solvents, thickeners, UV absorbers, light stabilizers, antifoaming agents, plasticizers, surface conditioners, anti-settling agents, dispersants, anti-flooding agents, rheology control agents, leveling agents, substrate wetting agents, and slip agents.

As the thickeners, for example, inorganic thickeners such as silicates, metal silicates, montmorillonite, and colloidal alumina; polyacrylic acid-based thickeners such as (meth)acrylic acid-(meth)acrylic acid ester copolymers and sodium polyacrylate; associative thickeners having hydrophilic and hydrophobic moieties in one molecule, which exhibit a thickening action in an aqueous medium as a result of the adsorption of the hydrophobic moieties onto the surface of pigment or emulsion particles in the coating material, the association of the hydrophobic moieties, and the like; cellulose derivative-based thickeners such as carboxymethyl cellulose, methyl cellulose, and hydroxyethyl cellulose; protein-based thickeners such as casein, sodium caseinate, and ammonium caseinate; alginic acid-based thickeners such as sodium alginate; polyvinyl-based thickeners such as polyvinyl alcohol, polyvinyl pyrrolidone, and polyvinyl benzyl ether copolymers; polyether-based thickeners such as Pluronic^{®} polyether, polyether dialkyl esters, polyether dialkyl ethers, and polyether epoxy-modified products; maleic anhydride copolymer-based thickeners such as partial esters of vinyl methyl ether-maleic anhydride copolymers; polyamide-based thickeners such as polyamide amine salts; and the like, as well as any combinations thereof, can be mentioned.

The polyacrylic acid-based thickeners are commercially available, and, for example, "ACRYSOL ASE-60", "ACRYSOL TT-615", and "ACRYSOL RM-5" (all trade names) manufactured by Rohm and Haas Company, "SN Thickener 613", "SN Thickener 618", "SN Thickener 630", "SN Thickener 634", and "SN Thickener 636" (all trade names) manufactured by San Nopco Limited, and the like can be mentioned.

In addition, the associative thickeners are commercially available, and, for example, "UH-420", "UH-450", "UH-462", "UH-472", "UH-540", "UH-752", "UH-756VF", and "UH-814N" (all trade names) manufactured by ADEKA Corporation, "ACRYSOL RM-8W", "ACRYSOL RM-825", "ACRYSOL RM-2020NPR", "ACRYSOL RM-12W", and "ACRYSOL SCT-275" (all trade names) manufactured by Rohm and Haas Company, "SN Thickener 612", "SN Thickener 621N", "SN Thickener 625N", "SN Thickener 627N", and "SN Thickener 660T" (all trade names) manufactured by San Nopco Limited, and the like can be mentioned.

As the pigment dispersion resin, it is preferable to use an acrylic-based pigment dispersion resin. More specifically, for example, an acrylic resin obtained by polymerizing a polymerizable unsaturated monomer with a polymerization initiator in the presence of a hydrophilic organic solvent can be mentioned.

As the polymerizable unsaturated monomer, the compounds exemplified above in the resin synthesis can be mentioned, and they can be suitably combined and used.

The pigment dispersion resin is preferably a resin that is soluble or dispersible in water, and specifically has a hydroxyl value of preferably 10 to 100 mgKOH/g, more preferably 20 to 70 mgKOH/g, and an acid value of preferably 10 to 80 mgKOH/g, more preferably 20 to 60 mgKOH/g.

Examples of the hydrophilic organic solvent used in the polymerization include alcohol-based organic solvents such as methanol, ethanol, isopropanol, n-butanol, and isobutanol; ether-based organic solvents such as dioxane and tetrahydrofuran; ethylene glycol ether-based organic solvents such as ethylene glycol monomethyl ether, ethylene glycol monoethyl ether, ethylene glycol mono-n-propyl ether, ethylene glycol monoisopropyl ether, ethylene glycol mono-n-butyl ether, ethylene glycol monoisobutyl ether, and ethylene glycol mono-tert-butyl ether; diethylene glycol ether-based organic solvents such as diethylene glycol monomethyl ether, diethylene glycol monoethyl ether, diethylene glycol mono-n-propyl ether, diethylene glycol monoisopropyl ether, diethylene glycol mono-n-butyl ether, diethylene glycol monoisobutyl ether, and diethylene glycol mono-tert-butyl ether; propylene glycol ether-based organic solvents such as propylene glycol monomethyl ether, propylene glycol monoethyl ether, propylene glycol mono-n-propyl ether, and propylene glycol monoisopropyl ether; dipropylene glycol ether-based organic solvents such as dipropylene glycol monomethyl ether, dipropylene glycol monoethyl ether, dipropylene glycol mono-n-propyl ether, and dipropylene glycol monoisopropyl ether; ester-based organic solvents such as ethyl acetate, butyl acetate, isobutyl acetate, and 3-methoxybutyl acetate; and the like, as well as combinations thereof.

It is preferable that the thermosetting resin composition of the invention contains the pigment dispersion resin in an amount of, as solids, preferably 5 to 70 mass%, more preferably 7 to 61 mass%, based on the total solids mass of the resin and the pigment dispersion resin. The above range is preferable from the viewpoint of the storage stability of the thermosetting resin composition and also the finishing properties, water resistance, intermediate polishing properties, and the like of the colored coating film formed using the colored coating material composition of the invention.

The coating targets, to which the thermosetting resin composition of the invention can be applied, are not particularly limited, and, for example, external panel parts of the car bodies of automobiles such as passenger cars, trucks, motorcycles, and buses; auto parts; home appliances such as mobile phones and audio equipment; and like various examples including building materials, furniture, adhesives, film and glass coating agents, etc., can be mentioned. In addition, the coating of precoated metals and and metal cans, in which a coating film is formed by high-temperature, short-time curing, can also be mentioned. Further, applications to electrodeposition coating materials, adhesives, particle boards, and the like can also be mentioned.

The thermosetting resin composition of the invention can also be used to form a multilayer coating film. Among multilayer coating films, it can also be favorably used in the formation of a multilayered coating film in a wet-on-wet manner.

The wet-on-wet process refers to a process in which a first coating film layer is formed and then only dried without curing, a second coating film layer is applied thereto, and the plurality of coating film layers are simultaneously heated and cured. It is also possible to form three or more coating film layers by this method.

In such formation of a multilayer coating film in a wet-on-wet manner, the coating film components transfer between layers. Therefore, it sometimes happens that components contained in one layer leach into other layers, adversely affecting the curing properties. The thermosetting resin composition of the invention has good reactivity and is unlikely to be adversely affected by other components, and thus can be favorably used in the formation of a multilayer coating film in a wet-on-wet manner.

As a commonly used method for wet-on-wet coating, a method in which an aqueous base coating material is used to form a first layer, and a solvent-based clear coating material is used to form a second layer, can be mentioned. The thermosetting resin composition of the invention may be used in both the first layer and the second layer, or may also be used in only one of these layers.

As described above, the thermosetting resin composition of the invention can provide favorable performance when made into an aqueous coating material. Further, as described above, even in the case of contamination with components of other coating film layers, good curing performance can be obtained.

Accordingly, even in the case where the thermosetting resin composition of the invention is used in the solvent-based clear coating material of the second layer, the problem of reduced curing performance due to components derived from the aqueous base coating material of the first layer is unlikely to occur, offering an advantage.

The aqueous thermosetting resin composition can also be used as an electrodeposition coating material composition. Electrodeposition coating materials include cationic electrodeposition coating materials and anionic electrodeposition coating materials, and the composition can be used as either of them.

The coating target may be the above metal material or a car body formed therefrom, whose metal surface has been subjected to a surface treatment such as a phosphate treatment, a chromate treatment, or a composite oxide treatment, or may also a coating target having a coating film.

As the coating target having a coating film, a substrate which has been surface-treated as desired to form an undercoat coating film thereon, etc., can be mentioned. In particular, a car body having an undercoat coating film formed from an electrodeposition coating material is preferable, and a car body having an undercoat coating film formed from a cationic electrodeposition coating material is more preferable.

The coating target may also be the above plastic material or an auto part formed therefrom, whose plastic surface has been subjected to a surface treatment, primer coating, or the like as desired. In addition, it may also be a combination of the above plastic material and the above metal material.

The method for coating with the thermosetting resin composition is not particularly limited. For example, air spray coating, airless spray coating, rotary atomization coating, curtain coat coating, and the like can be mentioned, and air spray coating, rotary atomization coating, and the like are preferable. During coating, an electrostatic charge may be applied as desired. By the above coating methods, a wet coating film can be formed from the aqueous coating material composition.

The wet coating film can be cured by heating. The curing can be performed by a known heating unit, for example, a drying furnace such as a hot blast stove, an electric furnace, or an infrared induction heating furnace. The wet coating film can be cured by heating at a temperature within a range of preferably about 80 to about 180°C, more preferably about 100 to about 170°C, and still more preferably about 120 to about 160°C, for preferably about 10 to about 60 minutes, and more preferably about 15 to about 40 minutes. In addition, low-temperature curing at 80 to 140°C is also possible, offering an advantage.

The thermosetting resin composition of the invention can also be used in a method for forming a multilayer coating film in a wet-on-wet manner. In this case, a method in which a coating material made of the thermosetting resin composition of the invention is applied, then, without curing, another coating material composition is applied thereon, and these two coating film layers are simultaneously baked to form a multilayer coating film, can be mentioned, for example. In addition, in such a coating method, it is also possible that in a multilayer coating film including two, three, or more layers, at least one layer is formed from the thermosetting resin composition of the invention.

In the case where the thermosetting resin composition of the invention is used in such formation of a multilayer coating film, the coating material used in combination may be water-based or solvent-based. Further, its curing system may be a curing system through a transesterification reaction as described above, or may also be other curing systems such as melamine curing, isocyanate curing, and the like.

Incidentally, in the case where the thermosetting resin composition of the invention is used in the field of coating materials, sufficient curing performance is required, said performance including smoothness, water resistance, acid resistance, and the like.

Meanwhile, in the case where it is used in the fields of adhesives and pressure-sensitive adhesives, curing performance as high as demanded for coating materials is not required. Although the thermosetting resin composition of the invention can be at a level usable as a coating material, even if the composition does not reach this level, it may still be usable in the fields of adhesives, pressure-sensitive adhesives, and the like.

The thermosetting resin composition of the invention may also be an air-drying thermosetting resin composition. That is, it may be used as a thermosetting resin composition that is not subjected to curing by heating after application, but is cured by being left at room temperature. This does not mean curing simply by drying, but means three-dimensional crosslinking at room temperature. The thermosetting composition of the invention is particularly excellent in curing performance at low temperatures and thus is suitable also for such applications.

The invention is also a cured film characterized by being formed by three-dimensionally crosslinking the thermosetting resin composition.

Such a cured film has sufficient performance to be used as a coating material or an adhesive.

The cured film also encompasses a cured film formed by the method for forming a multilayer coating film described above.

### Examples

Hereinafter, the invention will be described in further detail based on the examples. Incidentally, the invention is not limited to the following examples. Incidentally, parts in the text are by weight.

### Synthesis Example 1

35 parts of n-butyl methacrylate (product of Kyoeisha Chemical Co., Ltd.: Light Ester NB), 30 parts of methoxycarbonylmethyl methacrylate (product of Kyoeisha Chemical, LIGHT BO M-102), 25 parts of 4-hydroxybutyl acrylate, and 10 parts of styrene were formed into a monomer mixture, and 5 parts of AIBN as an initiator was dissolved in 20 parts of an aromatic hydrocarbon (T-SOL 100) to prepare an initiator solution. 80 parts of an aromatic hydrocarbon (T-SOL 100) was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution A having a weight average molecular weight of 9,400.

### Synthesis Example 2

60 parts of n-butyl methacrylate (product of Kyoeisha Chemical Co., Ltd.: Light Ester NB), 30 parts of 4-hydroxybutyl acrylate, and 10 parts of styrene were formed into a monomer mixture, and 5 parts of AIBN as an initiator was dissolved in 20 parts of an aromatic hydrocarbon (T-SOL 100) to prepare an initiator solution. 80 parts of an aromatic hydrocarbon (T-SOL 100) was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution B having a weight average molecular weight of 11,200.

### Synthesis Example 3

30 parts of n-butyl methacrylate (product of Kyoeisha Chemical Co., Ltd.: Light Ester NB), 30 parts of methoxycarbonylmethyl methacrylate (product of Kyoeisha Chemical, LIGHT BO M-102), 25 parts of 4-hydroxybutyl acrylate, 10 parts of styrene, and 5 parts of methacrylic acid were formed into a monomer mixture, and 3 parts of AIBN as an initiator was dissolved in 20 parts of propylene glycol monomethyl ether (PGME) to prepare an initiator solution. 80 parts of PGME was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution C having a weight average molecular weight of 18,400. This polymer solution can optionally be made aqueous by neutralization.

### Synthesis Example 4

60 parts of n-butyl methacrylate (product of Kyoeisha Chemical Co., Ltd.: Light Ester NB), 25 parts of 4-hydroxybutyl acrylate, 10 parts of styrene, and 5 parts of methacrylic acid were formed into a monomer mixture, and 3 parts of AIBN as an initiator was dissolved in 20 parts of propylene glycol monomethyl ether (PGME) to prepare an initiator solution. 80 parts of PGME was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution D having a weight average molecular weight of 19,300. This polymer solution can optionally be made aqueous by neutralization.

### Synthesis Example 5

10 parts of n-butyl methacrylate (product of Kyoeisha Chemical Co., Ltd.: Light Ester NB), 25 parts of 4-hydroxybutyl acrylate, 5 parts of styrene, 20 parts of N-(2-hydroxyethyl)acrylamide, and 40 parts of glycidyl methacrylate (product of Kyoeisha Chemical Co., Ltd.: Light Ester G) were formed into a monomer mixture, and 5 parts of 1,1,3,3-tetramethylbutyl peroxy-2-ethylhexanoate (NOF Corporation, PEROCTA O) as an initiator was dissolved in PGME to prepare an initiator solution. 100 parts of butyl glycol was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution E having a weight average molecular weight of 12,300.

### Synthesis Example 6

15 parts of n-butyl methacrylate (product of Kyoeisha Chemical Co., Ltd.: Light Ester NB), 35 parts of methoxycarbonylmethyl methacrylate (product of Kyoeisha Chemical, LIGHT BO M-102), 15 parts of 4-hydroxybutyl acrylate, 15 parts of styrene, and 20 parts of glycidyl methacrylate (Kyoeisha Chemicals: Light Ester G) were formed into a monomer mixture, and 12 parts of ADEKA REASOAP SR-3025 (ADEKA Corporation) and 70 parts of ion exchange water were added and emulsified using a homomixer at room temperature for 1 hour, followed by the preparation of a monomer emulsion. 115 parts of ion exchange water was placed in a stirrable flask, and, with a nitrogen blanket, polymerization was performed while adding the monomer emulsion and an initiator dropwise. As the initiator, 0.3 parts of ammonium persulfate was added. The polymerization temperature at this time was set at 75°C. The dropwise addition was performed for 3 hours, and further aging was performed at 75°C for 5 hours, thereby giving a polymer F.

In the following examples and comparative examples, the compositions obtained in the synthesis examples were blended as shown in the following tables to prepare thermosetting resin compositions, which were then each painted on a PET film using an applicator and baked for 30 minutes at the respective baking temperatures. The film thickness was 30 to 50 µm (dry). The resulting coating films were used for the evaluation of physical properties.

**[Table 1]**

| | Comparative Example 1 | Comparative Example 2 | Comparative Example 3 | Example 1 | Example 2 | Example 3 | Example 4 | Example 5 |
|---|---|---|---|---|---|---|---|---|
| Polymer A | 200 | | | 160 | | | | |
| Polymer B | | | | | | | | |
| Polymer C | | 200 | | | 160 | 160 | 150 | 100 |
| Polymer D | | | 160 | | | | | |
| Polymer E | | | 40 | 40 | 40 | 40 | | |
| Polymer F | | | | | | | 50 | 100 |
| Water | | | | | | 50 | | 20 |
| DMEA | | 5 | 5 | | 5 | 5 | 5 | 5 |
| MI | 2 | 2 | 2 | 2 | 2 | 2 | 2 | 2 |
| Zn(acac)2 | 3 | 3 | 3 | 3 | 3 | 3 | 3 | 3 |
| Baking Temperature | 80°C | 80°C | 80°C | 70°C | 80°C | 80°C | 80°C | 80°C |
| Gel Fraction | ⊚ | × | × | ⊚ | ⊚ | ⊚ | ⊚ | ⊚ |
| Xy Rubbing | ○ | △ | × | ○ | ○ | ○ | ⊚ | ○ |

| | | | | | | | | |
|---|---|---|---|---|---|---|---|---|
| DMEA: Dimethylethanolamine, neutralized MI: 1-Methylimidazole | | | | | | | | |

**[Table 2]**

| | Example 6 | Example 7 | Example 8 |
|---|---|---|---|
| Polymer C | 180 | 180 | 180 |
| Epolite 400E | 10 | | |
| Epolite 80MF | | 10 | |
| CELLOXIDE 2021 | | | 10 |
| DMEA | 5 | 5 | 5 |
| MI | 2 | 2 | 2 |
| Zn(acac)2 | 3 | 3 | 3 |
| Baking Temperature | 80°C | 80°C | 80°C |
| Gel Fraction | ⊚ | ⊚ | ⊚ |
| Xy Rubbing | ⊚ | ⊚ | ○ |

| | | | |
|---|---|---|---|
| Epolite 400E: Polyethylene glycol diglycidyl ether, product of Kyoeisha Chemical Epolite 80MF: Glycerin diglycidyl ether, product of Kyoeisha Chemical CELLOXIDE 2021: 3,4-Epoxycyclohexylmethyl-3',4'-epoxycyclohexane carboxylate, product of Daicel Ltd. | | | |

### Synthesis Example 7

In a four-necked reflux flask, 140 parts of trimellitic anhydride, 310 parts of toluene, and 14 parts of ion exchange water were added and stirred at 80°C for 1 hour to synthesize trimellitic acid. Subsequently, 115 parts of potassium hydroxide was added to synthesize tripotassium trimellitate. Next, 232 parts of triethylamine and 244 parts of methyl chloroacetate were added and allowed to react at 90°C for 10 hours or more. After the completion of the reaction, 210 parts of water was added to remove the precipitated potassium chloride. The organic layer was washed three times with 200 parts of water and then concentrated under reduced pressure, thereby giving an ester compound A.

### Synthesis Example 8

In a four-necked reflux flask, 60 parts of methyl chloroacetate, 40 parts of trisodium citrate, and 1.5 parts of triethylamine were mixed and stirred at 100°C for 5 hours. After the completion of the reaction, 250 parts of toluene and 150 parts of water were added, followed by washing with water. The organic layer was washed three times with 150 parts of water and then concentrated under reduced pressure, thereby giving an ester compound B.

### (Examples 9 to 11 and Comparative Examples 4 to 7)

In the following examples, the compositions obtained in the synthesis examples were blended as shown in the following table to prepare thermosetting resin compositions, which were then each painted on a PET film using an applicator and baked for 30 minutes at the respective baking temperatures. The film thickness was 30 to 50 µm (dry). The resulting coating films were used for the evaluation of physical properties.

**[Table 3]**

| | Comparative Example 4 | Comparative Example 5 | Comparative Example 6 | Comparative Example 7 | Example 9 | Example 10 | Example 11 |
|---|---|---|---|---|---|---|---|
| Polymer B | 140 | 140 | | | | | |
| Polymer C | | | | | | | 40 |
| Polymer D | | | 140 | 140 | 120 | 120 | |
| Polymer E | | | | | 30 | 30 | |
| Polymer F | | | | | | | 240 |
| Ester Compound A | 30 | | 30 | | 30 | | |
| Ester Compound B | | 30 | | 30 | | 30 | |
| Water | | | | | | | |
| DMEA | | | 5 | 5 | 5 | 5 | 2 |
| MI | 2 | 2 | 2 | 2 | 2 | 2 | 5 |
| Zn(acac)2 | 3 | 3 | 3 | 3 | 3 | 3 | 3 |
| Baking Temperature | 100°C | 100°C | 100°C | 100°C | 100°C | 100°C | 100°C |
| Gel Fraction | ⊚ | ⊚ | △ | △ | ⊚ | ⊚ | ⊚ |
| Xy Rubbing | ⊚ | ⊚ | × | × | ⊚ | ⊚ | ○ |

| | | | | | | | |
|---|---|---|---|---|---|---|---|
| DMEA: Dimethylethanolamine, neutralized MI: 1-Methylimidazole | | | | | | | |

Incidentally, in the Examples, the weight average molecular weight and dispersity are values of the area ratio and polystyrene-equivalent molecular weight measured by gel permeation chromatography (GPC). The column used was GPC KF-804L, and the solvent used was tetrahydrofuran. The gel fraction and xylene rubbing were measured based on the following criteria.

### (Gel Fraction)

The film obtained in each example was dissolved in refluxing acetone for 30 minutes using Soxhlet, and the remaining weight% of the film was measured as the gel fraction.

A gel fraction of 0 to 40% was rated not to withstand practical use, and "×" was given.

A gel fraction of 40 to 60% was rated to show a certain degree of curing, and "△" was given.

A gel fraction of 60 to 80% was rated to withstand practical use, and "○" was given.

A gel fraction of 80 to 100% was rated to have excellent performance, and "⊚" was given.

### (Xylene Rubbing)

The coating films obtained in the comparative examples and examples were rubbed 10 times with a medical gauze soaked in xylene. After xylene was dried, the surface conditions were visually observed.
⊚: No change at all
○: Slightly scratched
△: Slightly dissolved
×: Surface was whitened or dissolved

From the results in the above table, it is clear that the thermosetting resin composition of the invention is excellent in low-temperature curing performance.

### Synthesis Example 9

35 parts of n-butyl methacrylate (product of Kyoeisha Chemical Co., Ltd.: Light Ester NB), 15 parts of methoxycarbonylmethyl methacrylate (product of Kyoeisha Chemical, LIGHT BO M-102), 25 parts of 2-hydroxyethyl methacrylate (product of Kyoeisha Chemical Co., Ltd.: Light Ester HO-250), 5 parts of styrene, and 20 parts of glycidyl methacrylate (product of Kyoeisha Chemical Co., Ltd.: Light Ester G) were formed into a monomer mixture, and 5 parts of 1,1,3,3-tetramethylbutyl peroxy-2-ethylhexanoate (NOF Corporation, PEROCTA O) as an initiator was dissolved in 20 parts of propylene glycol monomethyl ether (PGME) to prepare an initiator solution. 80 parts of PGME was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution G having a weight average molecular weight of 13,000.

### Synthesis Example 10

180 parts of succinic anhydride and 173 parts of methanol are placed in a four-necked flask, and succinic anhydride is dissolved at 60 to 70°C. After confirming the disappearance of the peak of succinic anhydride by NMR, methanol was removed under reduced pressure to obtain monomethyl succinate.

190 parts of monomethyl succinate, 205 parts of glycidyl methacrylate, triethylbenzylammonium chloride, and a polymerization inhibitor were added and allowed to react at 90°C for 10 hours or more to obtain a monomer 1.

A monomer solution containing 35 parts of n-butyl methacrylate (product of Kyoeisha Chemical Co., Ltd.: Light Ester NB), 15 parts of the monomer 1, 25 parts of 2-hydroxyethyl methacrylate (product of Kyoeisha Chemical Co., Ltd.: Light Ester HO-250), 5 parts of styrene, and 20 parts of glycidyl methacrylate (product of Kyoeisha Chemical Co., Ltd.: Light Ester G) was prepared. Next, 5 parts of PEROCTA O as an initiator was dissolved in 20 parts of propylene glycol monomethyl ether (PGME) to prepare an initiator solution. 80 parts of PGME was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution H having a weight average molecular weight of 22,000.

### (Examples 12 to 16)

The compositions obtained in the synthesis examples were blended as shown in Table 4 below to prepare thermosetting resin compositions, which were then each painted on a PET film using an applicator and baked for 30 minutes at the respective baking temperatures. The film thickness was 30 to 50 µm (dry). The resulting coating films were used for the evaluation of physical properties.

**[Table 4]**

| | Example 12 | Example 13 | Example 14 | Example 15 | Example 16 |
|---|---|---|---|---|---|
| Polymer A | 180 | | | | |
| Polymer C | | 180 | 180 | | |
| Polymer G | | | | 200 | |
| Polymer H | | | | | 200 |
| Epolite 100MF | 10 | 10 | 10 | | |
| DBU | 6 | 6 | | 6 | 6 |
| DMAP | | | 6 | | |
| Baking | 80°C × 30 min | 80°C × 30 min | 80°C × 30 min | 80°C × 30 min | 80°C × 30 min |
| Gel Fraction | ⊚ | ⊚ | ⊚ | ⊚ | ⊚ |
| Xy Rubbing | ○ | ⊚ | ○ | ⊚ | ○ |

| | | | | | |
|---|---|---|---|---|---|
| Epolite 100MF: Trimethylolpropane triglycidyl ether, product of Kyoeisha Chemical DBU: Diazabicycloundecene DMAP: Dimethylaminopyridine | | | | | |

From the results in the above Table 4, it is clear that the thermosetting resin composition of the invention has good low-temperature curing performance even with a basic catalyst.

### Synthesis Example 11

10 parts of n-butyl methacrylate (product of Kyoeisha Chemical Co., Ltd.: Light Ester NB), 25 parts of methoxycarbonylmethyl methacrylate (product of Kyoeisha Chemical, LIGHT BO M-102), 25 parts of 2-hydroxyethyl methacrylate, 5 parts of styrene, and 35 parts of glycidyl methacrylate (product of Kyoeisha Chemical Co., Ltd.: Light Ester G) were formed into a monomer mixture, and 5 parts of 1,1,3,3-tetramethylbutyl peroxy-2-ethylhexanoate (NOF Corporation, PEROCTA O) as an initiator was dissolved in PGME to prepare an initiator solution. 100 parts of PGME was placed in a stirrable flask, and, with a nitrogen blanket, the monomer solution and the initiator solution were added dropwise. The polymerization temperature at this time was set at 100°C. The dropwise addition was performed for 2 hours, and further aging was performed at 100°C for 4 hours, thereby giving a polymer solution I having a weight average molecular weight of 18,000.

### (Example 17)

9 parts of 1-methylimidazole was added to 200 parts of the polymer solution I to prepare a thermosetting resin composition. The composition was painted on a PET film using an applicator and cured at 23°C for one week. The film thickness was 30 to 50 µm (dry). The resulting coating film was used for the evaluation of physical properties. The obtained coating film was ⊚ in Gel Fraction and ⊚ in Xy Rubbing, that is, was capable of being cured at 23°C, making it clear that it was usable as an air-drying thermosetting resin composition.

### (Industrial Applicability)

The thermosetting resin composition of the invention can be used for any applications of thermosetting resin compositions, such as coating material compositions, adhesive compositions, and other known applications.

## Claims

1. A thermosetting resin composition comprising:
a resin component (A) containing an ester group (a), an epoxy group (b), and a hydroxyl group (c); and
a transesterification catalyst (B), wherein
the ester group is any one of the following (a-1) to (a-5):
(a-1) a compound represented by the following general formula (1): 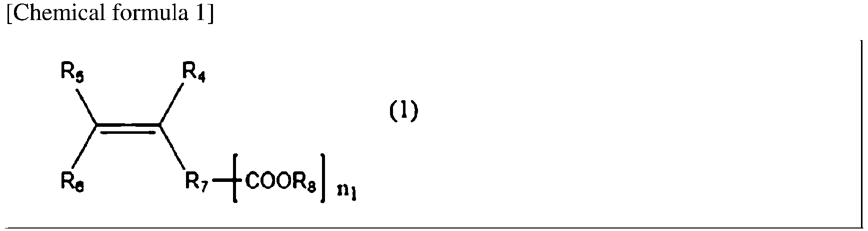
n1: 1 to 10
(in the formula, R₄, R₅, and R₆ are the same or different and are each hydrogen, an alkyl group, a carboxyl group, an alkyl ester group, or a structure represented by the following R₇-[COOR₈]n₁,
R₇ is an aliphatic, alicyclic, or aromatic alkylene group whose main chain has 50 or less atoms and which optionally has one or more functional groups selected from the group consisting of an ester group, an ether group, an amide group, and urethane in the main chain and optionally has a side chain, and
R₈ is an alkyl group having 50 or less carbon atoms,
with the proviso that the R₇-[COOR8]n₁ group in the compound represented by general formula (1) may be a lactone structure represented by the following general formula (1-1)) 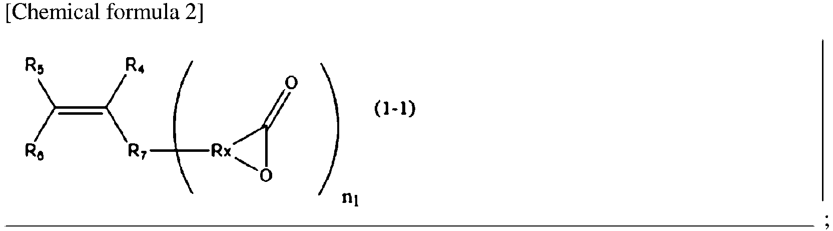
(a-2) a polymer having the above (a-1) as a structural unit;
(a-3) a compound having a structure represented by the following general formula (2): 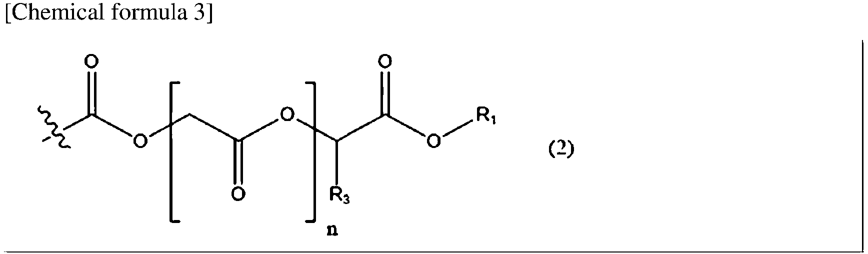
n = 0 to 20
R₁ is an alkyl group having 50 or less carbon atoms, and
R₃ is hydrogen or an alkyl group having 10 or less carbon atoms;
(a-4) a compound having a structure represented by the following general formula (3) or (4): 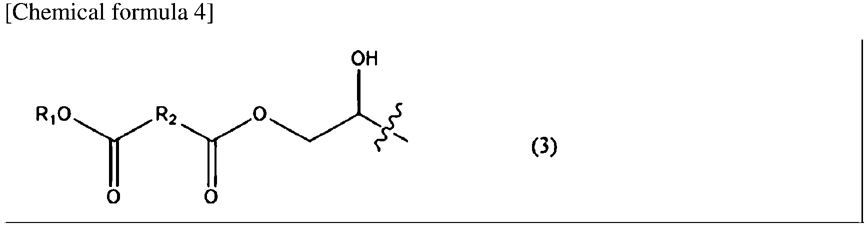 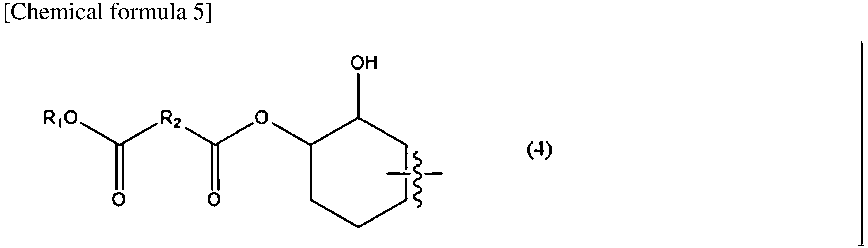
(in both of the above general formula (3) and general formula (4), R₁ is an alkyl group having 50 or less carbon atoms, and
R₂ is an alkylene group having 50 or less carbon atoms and optionally partially containing an oxygen atom or a nitrogen atom);
(a-5) the following general formula (5) and/or general formula (6): 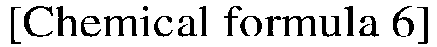 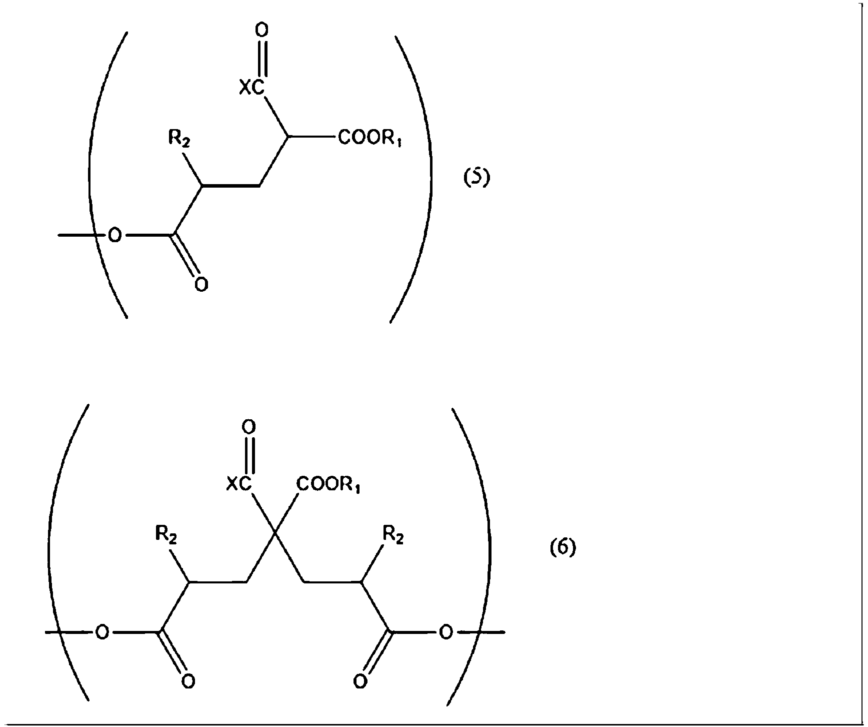
(R₁ represents a primary or secondary alkyl group, and
X represents a hydrocarbon group having 5 or less carbon atoms or an -OR₁ group).

2. The thermosetting resin composition according to claim 1, wherein the resin component (A) further contains an unsaturated functional group.

3. The thermosetting resin composition according to claim 1 or 2, wherein the resin component (A) further has a carboxyl group.

4. The thermosetting resin composition according to claim 1 or 2, wherein the resin component (A) is an aqueous composition.

5. The thermosetting resin composition according to claim 4, wherein the resin component (A) has been made aqueous by neutralizing a carboxyl group.

6. A cured film obtained by curing the thermosetting resin composition according to claim 1 or 2.
